# EUROPÄISCHE PATENTSCHRIFT

(11) **EP 2 985 820 B1**
(45) Veröffentlichungstag und Bekanntmachung des Hinweises auf die Patenterteilung: **03.04.2019**
(21) Anmeldenummer: 15181054.6
(22) Anmeldetag: 14.08.2015
(51) Int. Cl.: H01M 4/86, H01M 4/90, H01M 4/88, H01M 12/08, H01M 12/06

(54) **GASDIFFUSIONSELEKTRODE, VERFAHREN ZUM HERSTELLEN EINER GASDIFFUSIONSELEKTRODE UND BATTERIE**
GAS DIFFUSION ELECTRODE, METHOD FOR PRODUCING A GAS DIFFUSION ELECTRODE AND BATTERY
ÉLECTRODE DE DIFFUSION DE GAZ, PROCEDE DE FABRICATION D'UNE ELECTRODE DE DIFFUSION DE GAZ ET BATTERIE

(30) Priorität: 15.08.2014 DE 102014111701
(43) Veröffentlichungstag der Anmeldung: 17.02.2016
(73) Patentinhaber: Deutsches Zentrum für Luft- und Raumfahrt e.V., 51147 Köln (DE)
(72) Erfinder: Wittmaier, Dennis, 71665 Vaihingen (DE); Wagner, Nobert, 86368 Gersthofen (DE)
(74) Vertreter: Hoeger, Stellrecht & Partner Patentanwälte mbB

(56) Entgegenhaltungen:
- JP-A- 2006 196 329
- US-A1- 2013 330 640
- TAVARES A C ET AL: "Ni+RuO2 co-deposited electrodes for hydrogen evolution", ELECTROCHIMICA ACTA, ELSEVIER SCIENCE PUBLISHERS, BARKING, GB, Bd. 45, Nr. 25-26, 31. August 2000 (2000-08-31), Seiten 4195-4202, XP004227700, ISSN: 0013-4686, DOI: 10.1016/S0013-4686(00)00546-6
- XIAOXIN ZOU ET AL: "Efficient oxygen evolution reaction catalyzed by low-density Ni-doped Co3O4 nanomaterials derived from metal-embedded graphitic C3N4", CHEMICAL COMMUNICATIONS - CHEMCOM, Bd. 49, Nr. 68, 1. Januar 2013 (2013-01-01), Seite 7522, XP055239716, GB ISSN: 1359-7345, DOI: 10.1039/c3cc42891e

## Beschreibung

Die vorliegende Erfindung betrifft eine Gasdiffusionselektrode, insbesondere zur Verwendung als Kathode für eine Batterie, insbesondere für eine Metall-Luft-Batterie.

Ferner betrifft die vorliegende Erfindung ein Verfahren zum Herstellen einer Gasdiffusionselektrode, insbesondere zur Verwendung als Kathode für eine Batterie, insbesondere für eine Metall-Luft-Batterie, wobei sie durch Mischen von Nickelpulver und einem Cobaltoxidpulver, Ruthemiumoxidpulver oder Iridiumoxidpulver hergestellt wird. Außerdem betrifft die vorliegende Erfindung eine Batterie, insbesondere eine Metall-Luft-Batterie, umfassend eine negative Elektrode mit einem Anodenkontakt, einer positive Elektrode mit einem Kathodenkontakt und einen Elektrolyt.

Gasdiffusionselektroden, Verfahren zur Herstellung von Gasdiffusionselektroden und Batterien sind in vielfältiger Weise bekannt. Vielfach eingesetzte Lithium-Ionen-Batterien haben aufgrund der aktiven Materialien, die zur Ausbildung ihrer Anoden und Kathoden verwendet werden, eine begrenzte Kapazität, welche für zukünftige Anwendungen, insbesondere bei Elektrofahrzeugen, nicht ausreichend ist. Metall-Luft-Batterien haben zumindest theoretisch eine gegenüber Li-Ionen-Batterien deutlich höhere Kapazität.

Für Metall-Luft-Batterien ist es zur Ausbildung von Kathoden bekannt, teure Edelmetallkatalysatoren wie beispielsweise Platin oder dergleichen zu verwenden. Außerdem ist es bekannt, kohlenstoffgeträgerte Katalysatoren zu verwenden. Allerdings haben kohlenstoffgeträgerte Katalysatoren den Nachteil, dass sie in alkalischen Elektrolyten während der Sauerstoffentwicklung nur bedingt stabil sind. Zudem werden für den Einsatz derartiger Katalysatoren als Gasdiffusionselektroden große Mengen benötigt, so dass bei Verwendung von Edelmetallen hohe Kosten zur Ausbildung der Elektroden entstehen.

Aus der JP 2006 196329 A ist eine Luftelektrode und eine Batterie mit einer Luftelektrode bekannt. Die wissenschaftliche Veröffentlichung A.C. Tavares, S. Trasatti: "Ni + RuO2 co-deposited electrodes for hydrogen evolution", ELEC-TROCHIMICA ACTA, ELSEVIER SCIENCE PUBLISHERS, BARKING, GB, Besten Dank für Ihre E-Mail. 45, Nr. 25-26, 31. August 2000, Seiten 4195-4202, XP004227700 befasst sich mit Elektroden für die Wasserstoffentwicklung. In der wissenschaftlichen Veröffentlichung Xiaoxin Zou et al.: "Efficient oxygen evolution reaction catalyzed by low-density Ni-doped Co3O4 nanomaterials derived from metal-embedded graphitic C3N4", CHEMICAL COMMUNICATIONS - CHEMCOM, Bd. 49, Nr. 68, 1. Januar 2013, Seite 7522, XP055239716 wird die Synthetisierung von porösen Nickel-dotierterten Co₃O₄-Nanomaterialien mit geringer Dichte beschrieben. Die US 2013/0330640 A1 befasst sich mit Metall-geträgerte Nanodraht-Kathoden-Katalysatoren für Lithium-Luft-Batterien,

Es ist daher eine Aufgabe der vorliegenden Erfindung, eine Gasdiffusionselektrode, ein Verfahren zur Ausbildung einer Gasdiffusionselektrode und eine Batterie in der jeweils eingangs beschriebenen Art so zu verbessern, dass kostengünstige und stabile Gasdiffusionselektroden und Batterien ausgebildet werden können.

Diese Aufgabe wird bei einer Gasdiffusionselektrode der eingangs beschriebenen Art erfindungsgemäß dadurch gelöst, dass sie ein Gemisch aus pulverförmigem Nickel (Ni) und einem pulverförmigem Metalloxid (52) enthält und dass das Metalloxid Cobaltoxid (Co₃O₄), Rutheniumoxid (RuO₂) oder Iridiumoxid (IrO₂) ist oder enthält.

Nickel ist im Gegensatz zu Platin ein relativ günstiges und gut verfügbares Metall. Es verfügt zudem über für die Leistung der Gasdiffusionselektrode wichtige Eigenschaften wie insbesondere eine ausgezeichnete elektrische Leitfähigkeit, eine hervorragende Stabilität in einem alkalischen Medium sowie eine ausgezeichnete katalytische Aktivität bei der Sauerstoffentwicklung und eine gute Aktivität bei der Sauerstoffreduktion im alkalischen Medium. Co₃O₄ besitzt eine hervorragende Aktivität bei der Sauerstoffentwicklung. Zwar ist die Leitfähigkeit von Co₃O₄ sehr gering, doch wird dieser Nachteil durch die Kombination mit Nickel ohne weiteres ausgeglichen. Ferner ist Co₃O₄ auch im alkalischen Medium stabil. IrO₂ und RuO₂ zeigen teilweise geringfügig bessere Aktivitäten in der Sauerstoffentwicklung als Co₃O₄. Allerdings sind sie wesentlich teurer als Cobaltoxid und besitzen auch keine gute elektrische Leitfähigkeit. Durch die bislang nicht bekannten Kombinationen von Nickel und Cobaltoxid, Nickel und Rutheniumoxid sowie Nickel und Iridiumoxid zur Ausbildung von Gasdiffusionselektroden kann die Leistung derselben im Vergleich zu bekannten Batterien deutlich gesteigert werden. Zudem wird eine höhere Langzeitstabilität erreicht als dies bei Kohlenstoff enthaltenden Systemen der Fall ist. Durch die Beimischung von Co₃O₄ zu Nickel kann bei bestimmten Mischungsverhältnissen sogar die Leistung der Gasdiffusionselektrode im Vergleich zu reinen Nickelelektroden in der Sauerstoffentwicklung erhöht werden, obwohl für die Sauerstoffentwicklung das Nickel leistungsbestimmend ist. Die Mischung aus Nickel und Cobaltoxid ist somit hervorragend geeignet, einen kostengünstigen, bifunktionellen Katalysator zu bilden für die Sauerstoffreduktion einerseits und die Sauerstoffentwicklung andererseits in einem alkalischen Elektrolyten, insbesondere als Gasdiffusionselektrode in Form einer als Kathode für Metall-Luft-Batterien, beispielsweise für Lithium-Luft-Batterien. Außerdem kann durch die Beimischung von Co₃O₄, RuO₂ oder IrO₂ zu Nickel auf die Verwendung von Kohlenstoff als leitfähiger Zusatz verzichtet werden, wodurch die Stabilität der Gasdiffusionselektrode im Vergleich zu Kohlenstoff enthaltenden Elektroden signifikant verbessert wird. Insbesondere ist es auch denkbar, als Metalloxid eine Mischung aus Co₃O₄, RuO₂ oder IrO₂ einzusetzen.

Günstig ist es, wenn die Gasdiffusionselektrode aus einem Gemisch aus Nickel (Ni) und dem Metalloxid besteht. Zur Ausbildung der Gasdiffusionselektrode werden somit keine weiteren Komponenten benötigt. Insbesondere kann auf die Leitfähigkeit steigernde Zusätze wie beispielsweise Kohlenstoff verzichtet werden. Als Metalloxid kann insbesondere Co₃O₄, RuO₂ und/oder IrO₂ eingesetzt werden.

Vorteilhaft ist es, das Gemisch aus Nickel (Ni) mit einem Gewichtsanteil in einem Bereich von etwa 85 % bis etwa 50 % und Metalloxid mit einem Gewichtsanteil in einem Bereich von etwa 5 % bis etwa 40 % enthält. Vorzugsweise enthält das Gemisch Nickel (Ni) mit einem Gewichtsanteil in einem Bereich von etwa 80 % bis etwa 60 % und Metalloxid mit einem Gewichtsanteil in einem Bereich von etwa 10 % bis etwa 30 %. Günstigerweise enthält das Gemisch Nickel (Ni) mit einem Gewichtsanteil von etwa 70 % und Metalloxid mit einem Gewichtsanteil von etwa 20 %. Gasdiffusionselektroden mit Nickel und Metalloxid, insbesondere Co₃O₄, in den angegebenen Mischungsverhältnissen weisen hervorragende Katalysatoreigenschaften auf, und zwar sowohl bei der Sauerstoffreduktion als auch bei der Sauerstoffentwicklung.

Zur Verbesserung der mechanischen Stabilität der Gasdiffusionselektrode ist es vorteilhaft, wenn sie ein Bindemittel enthält. Mit einem geeigneten Bindemittel kann die Mischung aus Nickel und Cobaltoxid insbesondere mechanisch stabil verbunden werden. Ferner kann beispielsweise ein hydrophobes Bindemittel verhindern, dass sich die Gasdiffusionselektrode mit wässrigem Elektrolyt vollsaugt.

Günstig ist es, wenn ein Gewichtsanteil des Bindemittels in einem Bereich von etwa 2 % bis etwa 15 % liegt. Vorzugsweise beträgt der Gewichtsanteil des Bindemittels etwa 4 % bis etwa 10 %. Günstigerweise beträgt der Gewichtsanteil des Bindemittels etwa 6 %. Bindemittelanteile in den angegebenen Bereichen ermöglichen es, mechanisch stabile Gasdiffusionselektroden herzustellen, die insbesondere noch die erforderliche Porosität aufweisen sowie eine hinreichend große Oberfläche der aktiven Materialien Nickel und Cobaltoxid, Rutheniumoxid beziehungsweise Iridiumoxid um bifunktionell als Katalysator zu wirken.

Vorzugsweise enthält das Bindemittel Polytetrafluorethylen (PTFE), Polypropylen (PP), Polyvinylidenfluorid (PVDF) und/oder Polyethylen (PE). Insbesondere die genannten Polymere, deren Aufzählung nicht abschließend ist, ermöglichen die Herstellung eines stabilen Verbundes aus Nickel und Metalloxid, insbesondere Cobaltoxid, Rutheniumoxid oder Iridiumoxid. Beispielsweise kann das Bindemittel zur Aktivierung aufgeschmolzen werden, beispielsweise durch Erhöhung der Temperatur über die Schmelztemperatur des Bindemittels oder einer Bindemittelkomponente, die im Bindemittel enthalten ist. Ferner haben die angegebenen Bindemittel den Vorteil, dass sie hydrophob sind.

Zur Ausbildung einer möglichst großen aktiven Oberfläche der Gasdiffusionselektrode ist es günstig, wenn eine Metalloxid-Partikelgröße nicht größer als etwa 100 nm ist. Vorzugsweise ist die Metalloxid-Partikelgröße nicht größer als etwa 50 nm.

Um insbesondere für den Einsatz in einer Metall-Luft-Batterie die zum Betreiben einer solchen erforderliche Sauerstoffdiffusion zu ermöglichen, ist es vorteilhaft, wenn eine Porosität der Gasdiffusionselektrode in einem Bereich von etwa 40 % bis etwa 80 % liegt. Insbesondere ist es günstig, wenn die Porosität in einem Bereich von etwa 50 % bis etwa 65 % liegt.

Um eine möglichst große aktive Oberfläche des in der Gasdiffusionselektrode enthaltenen Nickels zu erreichen, ist es günstig, wenn eine Nickel-Korngröße des in der Gasdiffusionselektrode enthaltenen Nickels in einem Bereich von etwa 1 µm bis etwa 20 µm liegt. Insbesondere ist es vorteilhaft, wenn die Nickel-Korngröße in einem Bereich von etwa 3 µm bis etwa 7 µm liegt. Nickel-Korngrößen in den angegebenen Bereichen ermöglichen es, einerseits eine hohe Porosität der Gasdiffusionselektrode zu realisieren und andererseits eine für die Katalysatorwirkung große Oberfläche zu erreichen.

Eine besonders hohe katalytische Aktivität bei der Sauerstoffreduktion im alkalischen Medium kann erreicht werden, wenn ein Anteil in einem Bereich von etwa 75 % bis etwa 95 % des in der Gasdiffusionselektrode enthaltenen Nickels eine Nickel-Korngröße in einem Bereich von etwa 3 µm bis etwa 7 µm aufweist. Vorteilhafterweise beträgt der Anteil der Korngröße im angegebenen Bereich etwa 90 %.

Ferner ist es vorteilhaft, wenn ein Anteil in einem Bereich von etwa 75 % bis etwa 95 % des in der Gasdiffusionselektrode enthaltenen Nickels eine Nickel-Korngröße in einem Bereich von etwa 1 µm bis etwa 20 µm aufweist. Günstig ist es, wenn der Anteil der Korngröße in diesem Bereich etwa 90 % beträgt. Auch dies wirkt sich insbesondere positiv auf die katalytische Aktivität bei der Sauerstoffreduktion im alkalischen Medium aus.

Günstigerweise weist die Gasdiffusionselektrode eine Dicke in einem Bereich von etwa 200 µm bis etwa 500 µm auf. Vorzugsweise liegt die Dicke in einem Bereich von etwa 270 µm bis etwa 330 µm. Insbesondere im letztgenannten Dickenbereich weist die Gasdiffusionselektrode optimale Eigenschaften sowohl hinsichtlich der Aktivität bei der Sauerstoffreduktion als auch bei der Sauerstoffentwicklung auf.

Um die Langzeitstabilität der Gasdiffusionselektrode zu verbessern, ist es vorteilhaft, wenn sie kohlenstofffrei ist. Mit anderen Worten kann zur Ausbildung der Gasdiffusionselektrode vollständig auf die Verwendung von Kohlenstoff verzichtet werden.

Gemäß einer weiteren bevorzugten Ausführungsform der Erfindung kann vorgesehen sein, dass die Gasdiffusionselektrode ein Substrat umfasst, welches die Mischung aus Nickel und dem Metalloxid, insbesondere Cobaltoxid, Rutheniumoxid oder Iridiumoxid, trägt. Das Substrat kann insbesondere die Handhabung der Gasdiffusionselektrode sowie deren Herstellung und mechanische Stabilität verbessern.

Besonders einfach und kostengünstig ausbilden lässt sich das Substrat, wenn es aus einem Metall hergestellt ist. Insbesondere kann das Substrat in Form eines Netzes ausgebildet sein oder durch ein Streckmetall gebildet werden. Das Metallnetz ist günstigerweise aus Edelstahl, Nickel oder Silber hergestellt. Das Streckmetall ist vorzugsweise ebenfalls aus den genannten Materialien hergestellt. Insbesondere lässt sich die Mischung aus Nickel und Metalloxid, insbesondere Cobaltoxid, Rutheniumoxid oder Iridiumoxid, mit einem solchen Metallnetz zusammen verpressen, um eine mechanisch stabile Elektrode in Form eines bifunktionellen Katalysators auszubilden.

Die eingangs gestellte Aufgabe wird ferner bei einem Verfahren der eingangs beschriebenen Art erfindungsgemäß dadurch gelöst, dass als Metalloxid Cobaltoxid (Co₃O₄), Rutheniumoxid (RuO₂) oder Iridiumoxid (IrO₂) verwendet wird und dass das Nickel und/oder das Metalloxid, insbesondere Cobaltoxid, Rutheniumoxid oder Iridiumoxid, in Pulverform zusammengemischt werden.

Die Gasdiffusionselektrode lässt sich so auf einfache Weise herstellen und weist die bereits oben beschriebenen vorteilhaften Eigenschaften auf. Die Herstellung der Gasdiffusionselektrode lässt sich insbesondere dadurch vereinfachen, dass das Nickel und/oder das Metalloxid, insbesondere Cobaltoxid, Rutheniumoxid oder Iridiumoxid, in Pulverform zusammengemischt werden.

Die Herstellung der Gasdiffusionselektrode lässt sich insbesondere dadurch vereinfachen, dass das Nickel und/oder das Metalloxid, insbesondere Cobaltoxid, Rutheniumoxid oder Iridiumoxid, in Pulverform zusammengemischt werden.

Die mechanische Stabilität der Gasdiffusionselektrode lässt sich weiter verbessern, wenn das Nickel und das Metalloxid, insbesondere Cobaltoxid, Rutheniumoxid oder Iridiumoxid, mit einem Bindemittel vermischt werden.

Eine hervorragende Stabilität in der Gasdiffusionselektrode kann insbesondere dadurch erreicht werden, wenn als Bindemittel Polytetrafluorethylen (PTFE), Polypropylen (PP), Polyvinylidenfluorid (PVDF) und/oder Polyethylen (PE) verwendet wird. Die Liste genannter Kunststoffe ist nicht abschließend. Zudem können die Materialien allein oder in beliebiger Kombination miteinander als Bindemittel eingesetzt werden.

Das Mischen der Materialien zur Ausbildung der Gasdiffusionselektrode, insbesondere das Mischen von Nickel und Cobaltoxid, optional auch mit einem Bindemittel, wird günstigerweise in einer Messermühle durchgeführt. Insbesondere, wenn ein Bindemittel verwendet wird, entstehen so beim Mischen Fäden aus dem Bindemittel, sogenannte Binder-Fäden, welche die Partikel der Ausgangsmaterialien Nickel und Cobaltoxid ähnlich einem Spinnennetz zusammenhalten. Eine Mahldauer zum Mischen in der Messermühle liegt vorzugsweise in einem Bereich von wenigen Sekunden, beispielsweise bei 2 Sekunden.

Ferner ist es günstig, wenn zur Ausbildung der Gasdiffusionselektrode die Bestandteile nach dem Mischen zusammengepresst werden. Insbesondere kann hierfür eine hydraulische Presse oder Walze verwendet werden. Insbesondere ist es denkbar, ein Walzverfahren mit Linienkraft zu verwenden. Durch das Zusammenpressen der gemischten Materialien kann ein stabiler mechanischer Verbund erzeugt werden. Mit einer Walze wird insbesondere ein kontinuierlicher Herstellungsprozess zur Ausbildung von Gasdiffusionselektroden ermöglicht.

Vorzugsweise wird ein Pressdruck beim Zusammenpressen in einem Bereich von etwa 1 bar bis etwa 5 bar genutzt. Vorzugsweise liegt der Pressdruck bei etwa 2,5 bar. So kann ein hinreichend dichter Verbund der eingesetzten Materialien erreicht werden, ohne dass die Porosität der Gasdiffusionselektrode zu gering wird.

Vorteilhaft ist es, wenn eine Presstemperatur beim Zusammenpressen in einem Bereich von etwa 20°C bis etwa 30°C liegt. Insbesondere kann sie bei etwa 25°C liegen. Eine solche Presstemperatur ermöglicht es, die Gasdiffusionselektrode bei Raumtemperatur herzustellen. Dies verringert den Herstellungsaufwand und die damit verbundenen Kosten.

Gemäß einer weiteren bevorzugten Variante des erfindungsgemäßen Verfahrens kann vorgesehen sein, dass zur Ausbildung der Gasdiffusionselektrode die Bestandteile nach dem Mischen und Zusammenpressen getempert werden. Insbesondere dann, wenn die zusammengepresste Mischung ein Bindemittel enthält, kann so ein optimaler mechanischer Verbund der Gasdiffusionselektrode erreicht werden, beispielsweise durch Aufschmelzen des Bindemittels oder mindestens eines Bestandteils desselben und Verkleben der Komponenten Nickel und Cobaltoxid mit dem aufgeschmolzenen Bindemittel beziehungsweise des mindestens einen Bestandteils desselben.

Vorteilhaft ist es, wenn das Tempern bei einer Tempertemperatur durchgeführt wird, die höher als eine Bindemittelschmelztemperatur des verwendeten Bindemittels ist. Insbesondere kann vorgesehen sein, dass die Tempertemperatur höher als eine Bindemittelkomponentenschmelztemperatur mindestens einer Bindemittelkomponente eines aus mindestens zwei unterschiedlichen Bindemittelkomponenten gebildeten Bindemittels ist. So kann sichergestellt werden, dass mindestens ein Bestandteil der zusammengepressten Mischung beim Tempern aufschmilzt und die Bestandteile der Gasdiffusionselektrode zusammenbindet, insbesondere durch Verkleben.

Um ein sicheres Verkleben zur Ausbildung eines stabilen mechanischen Verbunds sicherstellen zu können, ist es günstig, wenn beim Tempern das Bindemittel oder mindestens eine Bindemittelkomponente desselben aufgeschmolzen wird.

Vorzugsweise beträgt die Tempertemperatur mindestens etwa 330°C. Vorzugsweise beträgt sie etwa 340°C. Insbesondere, wenn das Bindemittel PTFE ist oder PTFE umfasst, kann bei einer Tempertemperatur von etwa 340°C, die oberhalb des Schmelzpunkts von PTFE liegt, ein sicherer Verbund des gemischten und zusammengepressten, die Gasdiffusionselektrode ausbildenden Materials hergestellt werden.

Günstigerweise wird das Tempern für eine Temperzeit in einem Bereich von etwa 30 Minuten bis etwa 90 Minuten durchgeführt. Vorzugsweise beträgt die Temperzeit etwa 60 Minuten. Wird das gemischte und zusammengepresste Elektrodenmaterial im angegebenen Zeitbereich getempert, kann ein stabiler mechanischer Verbund der gemischten Materialien erreicht werden.

Auf einfache Weise lässt sich die Gasdiffusionselektrode nach dem Tempern nutzen, wenn sie nach dem Tempern abgekühlt wird. Auf besonders einfache Weise kann dies geschehen durch Abkühlen an Umgebungsluft.

Die eingangs gestellte Aufgabe wird ferner bei einer Batterie der eingangs beschriebenen Art erfindungsgemäß dadurch gelöst, dass die positive Elektrode in Form einer der oben beschriebenen Gasdiffusionselektroden ausgebildet ist oder eine solche umfasst.

Mit einer der oben beschriebenen Gasdiffusionselektroden lässt sich eine kostengünstige, leistungsstarke Batterie, insbesondere eine Metall-Luft-Batterie herstellen, die aufgrund der Ausgestaltung der Gasdiffusionselektrode insbesondere eine hohe katalytische Aktivität bei der Sauerstoffreduktion im alkalischen Medium sowie eine hohe Aktivität in der Sauerstoffentwicklung aufweist. Insbesondere lässt sich so eine Batterie mit besonders hoher Kapazität ausbilden.

Um eine besonders gute Funktionalität der Batterie sicherzustellen, ist es vorteilhaft, wenn diese einen alkalischen Elektrolyten umfasst. Vorzugsweise umfasst die Batterie einen wässrigen alkalischen Elektrolyt.

Gemäß einer weiteren bevorzugten Ausführungsform der Erfindung kann vorgesehen sein, dass die negative Elektrode ein Metall ist oder umfasst oder Metallionen umfasst. So kann beispielsweise eine Metall-Luft-Batterie mit hohem Wirkungsgrad ausgebildet werden. Beispielsweise kann statt einer metallischen Anode eine Anode aus Lithiumtitanat (LTO) verwendet werden. Eine Batterie mit einer besonders hohen Energiedichte lässt sich ausbilden, wenn das Metall Lithium ist oder umfasst.

Die nachfolgende Beschreibung bevorzugter Ausführungsformen der Erfindung dient im Zusammenhang mit den Zeichnungen der näheren Erläuterung. Es zeigen:
- Figur 1:: eine schematische Prinzipskizze einer Metall-Luft-Batterie;
- Figur 2:: eine schematische Schnittansicht durch eine Gasdiffusionselektrode;
- Figur 3:: Abhängigkeit der Stromdichte von der Anzahl der Lade- und Entladezyklen einer reinen Nickel-Elektrode bei kathodischem Betrieb, also in der Sauerstoffreduktionsreaktion (ORR) bei 300 mV bezogen auf die reversible Wasserstoffelektrode (RHE), und bei anodischem Betrieb, also in der Sauerstoffentwicklungsreaktion (OER) bei 1800 mV bezogen auf die reversible Wasserstoffelektrode (RHE);
- Figur 4:: eine schematische Ansicht einer Halbzelle mit einer Drei-Elektroden-Anordnung in einem Elektrolyttank gefüllt mit 1 M LiOH (aq.);
- Figur 5a:: Rasterelektronenmikroskopaufnahme einer unbenutzten Gasdiffusionselektrode aus reinem Nickel ;
- Figur 5b:: Rasterelektronenmikroskopaufnahme einer unbenutzten Gasdiffusionselektrode aus reinem Nickel mit 1000facher Vergrößerung im Vergleich zur Figur 5a;
- Figur 5c:: Rasterelektronenmikroskopaufnahme einer Gasdiffusionselektrode aus reinem Nickel aus reinem Nickel mit einem Bindemittel-Anteil von 10 Gew.% nach 1200 Lade- und Entladezyklen und einer 10000fachen Vergrößerung;
- Figur 5d:: Rasterelektronenmikroskopaufnahme einer Gasdiffusionselektrode mit einem Gewichtsanteil von Nickel von 70 %, einem Gewichtsanteil von 20 % Cobaltoxid und einem Gewichtsanteil von 10 % Bindemittel;
- Figur 6a:: Zyklovoltammogramme von Gasdiffusionselektroden mit Zusammensetzungen gemäß Tabelle 1;
- Figur 6b:: Stromdichten im anodischen Betrieb (OER) in Abhängigkeit des Cobaltoxid-Anteils der Gasdiffusionselektroden ermittelt aus den Zyklovoltammogrammen der Figur 6a;
- Figur 6c:: Stromdichten im kathodischen Betrieb (ORR) in Abhängigkeit des Cobaltoxid-Anteils der Gasdiffusionselektroden ermittelt aus den Zyklovoltammogrammen der Figur 6a;
- Figur 6d:: Widerstände der Gasdiffusionselektroden in Abhängigkeit von deren Cobaltoxid-Anteil;
- Figur 6e:: spezifische Oberfläche der Gasdiffusionselektroden in Abhängigkeit von deren Cobaltoxid-Anteil;
- Figur 7a:: Stromdichten für die Sauerstoffentwicklungsreaktion (OER) in Abhängigkeit des Cobaltoxid-Anteils der Gasdiffusionselektroden ermittelt aus potentiostatischen Messungen;
- Figur 7b:: Stromdichten für die Sauerstoffreduktionsreaktion (ORR) in Abhängigkeit des Cobaltoxid-Anteils der Gasdiffusionselektroden ermittelt aus potentiostatischen Messungen;
- Figur 8a:: Abhängigkeit der Elektrodendicke von der Höhe des zur Ausbildung der Elektroden benutzten flexiblen Rahmens;
- Figur 8b:: Stromdichten für die Sauerstoffentwicklungsreaktion (OER) in Abhängigkeit des zur Ausbildung der Elektroden benutzten flexiblen Rahmens ermittelt aus Zyklovoltammogrammen;
- Figur 8c:: Stromdichten für die Sauerstoffreduktionsreaktion (ORR) in Abhängigkeit des zur Ausbildung der Elektroden benutzten flexiblen Rahmens ermittelt aus Zyklovoltammogrammen;
- Figur 8d:: Stromdichten für die Sauerstoffentwicklungsreaktion (OER) in Abhängigkeit des zur Ausbildung der Elektroden benutzten flexiblen Rahmens ermittelt aus potentiostatischen Messungen;
- Figur 8e:: Stromdichten für die Sauerstoffreduktionsreaktion (ORR) in Abhängigkeit des zur Ausbildung der Elektroden benutzten flexiblen Rahmens ermittelt aus potentiostatischen Messungen;
- Figur 9a:: Stromdichten für die Sauerstoffentwicklungsreaktion (OER) in Abhängigkeit des Bindemittelanteils ermittelt aus Zyklovoltammogrammen;
- Figur 9b:: Stromdichten für die Sauerstoffreduktionsreaktion (ORR) in Abhängigkeit des Bindemittelanteils ermittelt aus Zyklovoltammogrammen;
- Figur 9c:: Stromdichten für die Sauerstoffentwicklungsreaktion (OER) in Abhängigkeit des Bindemittelanteils ermittelt aus potentiostatischen Messungen;
- Figur 9d:: Stromdichten für die Sauerstoffreduktionsreaktion (ORR) in Abhängigkeit des Bindemittelanteils ermittelt aus potentiostatischen Messungen;
- Figur 10a:: Schematische Darstellung eines Ersatzschaltbilds für die kathodische elektrochemische Impedanzspektroskopie (EIS) der Elektroden (links) und ergänzt (rechts) für die anodische elektrochemische Impedanzspektroskopie (EIS) der Elektroden;
- Figur 10b:: Widerstandsdiagramme R_{total,ORR} in Abhängigkeit der Stromdichte von Gasdiffusionselektroden auf Basis von reinem Nickel sowie auf Basis von Nickel mit einem Gewichtsanteil von 20 % Cobaltoxid und 10 Gew.% Bindemittel beziehungsweise mit einem Gewichtsanteil von 20 % Cobaltoxid und 6 Gew.% Bindemittel für die Sauerstoffreduktionsreaktion (ORR);
- Figur 10c:: Widerstandsdiagramme R_{3,OER} in Abhängigkeit der Stromdichte von Gasdiffusionselektroden auf Basis von reinem Nickel sowie auf Basis von Nickel mit einem Gewichtsanteil von 20 % Cobaltoxid und 10 Gew.% Bindemittel beziehungsweise mit einem Gewichtsanteil von 20 % Cobaltoxid und 6 Gew.% Bindemittel für die Sauerstoffentwicklungsreaktion (OER);
- Figur 10d:: Widerstandsdiagramme R_{3,ORR} in Abhängigkeit der Stromdichte von Gasdiffusionselektroden auf Basis von reinem Nickel sowie auf Basis von Nickel mit einem Gewichtsanteil von 20 % Cobaltoxid und 10 Gew.% Bindemittel beziehungsweise mit einem Gewichtsanteil von 20 % Cobaltoxid und 6 Gew.% Bindemittel für die Sauerstoffreduktionsreaktion (ORR);
- Figur 10e:: Widerstandsdiagramme R_{3,OER} in Abhängigkeit der Stromdichte von Gasdiffusionselektroden auf Basis von reinem Nickel sowie auf Basis von Nickel mit einem Gewichtsanteil von 20 % Cobaltoxid und 10 Gew.% Bindemittel beziehungsweise mit einem Gewichtsanteil von 20 % Cobaltoxid und 6 Gew.% Bindemittel für die Sauerstoffentwicklungsreaktion (OER);
- Figur 10f:: Widerstandsdiagramme R_{5,OER} in Abhängigkeit der Stromdichte von Gasdiffusionselektroden auf Basis von reinem Nickel sowie auf Basis von Nickel mit einem Gewichtsanteil von 20 % Cobaltoxid und 10 Gew.% Bindemittel beziehungsweise mit einem Gewichtsanteil von 20 % Cobaltoxid und 6 Gew.% Bindemittel für die Sauerstoffentwicklungsreaktion (OER);
- Figur 11:: Zyklovoltammogramme von Gasdiffusionselektroden aus Nickel mit mit 5%igem Gewichtsanteil Iridiumoxid, 10%igem Gewichtsanteil Iridiumoxid und 20%igem Gewichtsanteil Iridiumoxid.

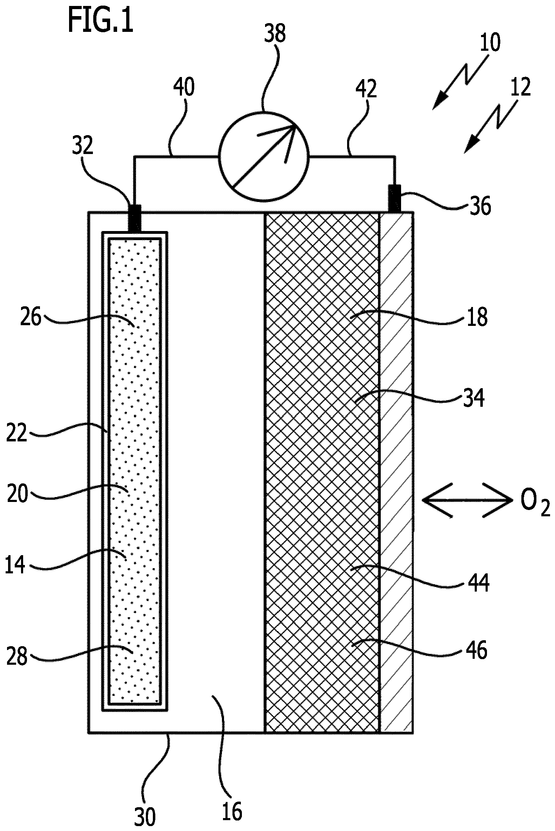

In Figur 1 ist ein Aufbau einer insgesamt mit dem Bezugszeichen 10 bezeichneten Batterie schematisch dargestellt. Die Batterie 10 ist in Form einer Metall-Luft-Batterie 12 ausgebildet. Sie umfasst eine negative Elektrode 14, die mit einem Elektrolyt 16 in Kontakt steht. Mit dem Elektrolyt 16 steht ferner auch eine positive Elektrode 18 der Batterie 10 in Kontakt. Die negative Elektrode 14, die auch als Anode 20 bezeichnet wird, kann optional von einem Separator 22 umgeben sein, welcher in Form einer permeablen Membran ausgebildet sein kann. Insbesondere bei einer Li-Luft-Batterie mit wässrigem alkalischen oder sauren Elektrolyten sollte die Anode vor diesem Elektrolyten geschützt werden durch den flüssigkeitsdichten, ionenleitenden Separator, so dass sich der wässrige Elektrolyt nur auf der Kathodenseite befindet. In diesem Fall wird auf der Anodenseite vorzugweise ein organischer wasserfreier Elektrolyt eingesetzt. Ferner gibt es die Möglichkeit, die Batterie 10 auf beiden Seiten mit einem wasserfreien organischen Elektrolyten auszuführen. Dabei stehen beide Elektroden 14 und 18 mit dem Elektrolyten in Kontakt und ein beschriebener permeabler Separator kann zum Einsatz kommen.

Die Anode 20 besteht vorzugsweise aus einem Metall 26, beispielsweise Lithium 28. Der Separator 22 ist dann vorzugsweise derart ausgebildet, dass er für positive Metall-Ionen, insbesondere Li⁺-Ionen, durchlässig, so dass diese in den Elektrolyt 16 gelangen können.

Beim Elektrolyt kann es sich insbesondere um einen alkalischen Elektrolyt handeln, insbesondere um einen wässrigen alkalischen oder wasserfreien organischen Elektrolyten. Beispielsweise kann eine 1 M LiOH-Lösung verwendet werden.

Optional kann die Batterie 10 ein Gehäuse 30 umfassen, aus dem ein mit der Anode 20 elektrisch leitfähig verbundener Anodenkontakt 32 herausragt. In analoger Weise kann mit der positiven Elektrode 18, die auch als Kathode 34 bezeichnet wird, ein Kathodenkontakt 36 elektrisch leitend verbunden sein, welcher aus dem Gehäuse 30 vorsteht.

Der Anodenkontakt 32 kann über eine Verbindungsleitung 40 mit einem Verbraucher 38 und über eine weitere Verbindungsleitung 42 mit dem Kathodenkontakt 36 verbunden werden, um einen Stromfluss von der Kathode zur Anode zu bewirken. Elektronen fließen dabei von der Anode zur Kathode. Die Batterie 10 wird dabei entladen. Beim Laden der Batterie fließen der Strom und die Elektronen in die jeweils andere Richtung.

Die chemischen Grundgleichungen der Lithium-Luft-Batterie lauten wie folgt:
(1) Kathode: O₂ + 2 H₂O + 4e⁻→ 4OH⁻
(2) Anode: Lithium→ Li⁺ + e⁻
(3) Batterie-Gleichung: 4Li + O₂ + 2H₂O → 4Li⁺ + 4OH⁻

Die Zellenspannung der Lithium-Luft-Batterie 12 beträgt mit einem wässrigen alkalischen Elektrolyt E₀=3,45 V.

Im Falle des Einsatzes eines wasserfreien organischen Elektrolyten lautet die Reaktionsgleichung der Lithium-Luft-Batterie wie folgt:
(4) Batterie-Gleichung: 4Li + O₂ → Li₂O₂

Die Zellenspannung der Lithium-Luft-Batterie 12 beträgt mit einem wasserfreien organischen Elektrolyten E₀=2,96 V.

Die Kathode 34 nimmt an der chemischen Reaktion selbst nicht teil. Sie ist als Gasdiffusionselektrode 44 ausgebildet, und zwar in Form eines bifunktionellen Katalysators 46. Der Katalysator 46 hat im Entlademodus der Batterie 10 die Aufgabe, die Reduktion von Sauerstoff zu fördern, im Ladebetrieb der Batterie 10 Sauerstoff zu entwickeln.

Während des eigentlichen Betriebs der Batterie 10, also beim Entladen, wird Sauerstoff (O₂) an der Kathode gemäß obiger Gleichung (1) reduziert. Gleichzeitig wird Lithium an der Anode oxidiert, so dass Lithium-Ionen (Li⁺) und Elektronen (e⁻) gemäß Gleichung (2) freigesetzt werden.

Gleichung (3) gibt den Gesamtumsatz der Lithium-Luft-Batterie an.

Umgekehrt werden beim Laden der Batterie 10 Li⁺-Ionen durch Aufnahme von Elektronen zu Lithium reduziert, an der Kathode OH⁻-Ionen unter Abgabe von Elektronen zu Sauerstoff (O₂) und Wasser (H₂O) oxidiert.

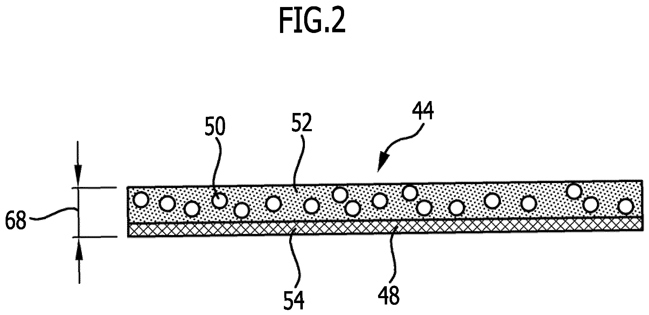

Der Aufbau der Gasdiffusionselektrode 44 ist schematisch in Figur 2 dargestellt. Auf einem optionalen Substrat 48 ist ein Gemisch aus Nickel (Ag) 50 und Cobaltoxid (Co₃O₄) 52 angeordnet. Das Substrat 50 kann in Form gasdurchlässigen Metalls ausgebildet sein, beispielsweise in Form eines Netzes 54 aus Edelstahl.

Zur Herstellung der Elektroden wird Cobaltoxid-Pulver, beispielsweise in einer Reinheit von 99,5 % und einer Korngröße kleiner 50 nm (verfügbar von der Firma Sigma Aldrich) zunächst mit Nickel, beispielsweise Nickel-Pulver in einer Reinheit von 99,9% und einer Korngröße in einem Bereich von 3 µm bis 7 µm (verfügbar von der Firma Strem Chem Inc.), gemischt.

Optional wird die Mischung aus Nickel und Cobaltoxid-Pulver mit einem Bindemittel gemischt. Dies kann beispielsweise Polytetrafluorethylen (PTFE), Polypropylen (PP), Polyvinylidenfluorid (PVDF) und/oder Polyethylen (PE) sein oder eine beliebige Mischung aus den genannten Materialien. Insbesondere wurde für die nachfolgend beschriebenen Elektroden Polytetrafluorethylen (Hostaflon® TF 9207, 3M) als Bindemittel eingesetzt.

Das Mischen der Inhaltsstoffe zur Ausbildung der Kathode 34 erfolgt vorzugsweise in einer Messermühle, um eine homogene Mischung zu erhalten. Beim Mischen entstehen Fäden aus dem Bindemittel, die ähnlich einem Spinnennetz die Mischung zusammenhalten. Eine Mahldauer der Inhaltsstoffe beträgt etwa 2 Sekunden.

Nach dem Mahlen wird die Mischung in einen flexiblen Rahmen gefüllt, mit dem Netz 54 aus Edelstahl bedeckt und zu einem festen Verbund verpresst, vorzugsweise mit einer hydraulischen Presse bei einem Druck von etwa 2,5 bar. Es wurden flexible Rahmen mit Dicken von 1 mm, 1,5 mm und 2 mm verwendet. Die Temperatur beim Pressen betrug etwa 25°C. Das Netz aus Edelstahl dient einerseits zur Verbesserung der mechanischen Stabilität der Kathode 34 und andererseits als Stromkollektor. Nach dem Pressen wurden die Elektroden in einem Ofen für eine Stunde bei 340°C in Umgebungsluft wärmebehandelt, um die Katalysatorschicht zu verfestigen.

In der beschriebenen Weise wurden Elektroden mit einer Dicke 68 in einem Bereich von etwa 200 µm bis etwa 500 µm hergestellt. Als besonders gut geeignet für die Funktion der Batterie 10 haben sich Dicken 68 in einem Bereich von etwa 270 µm bis etwa 330 µm erwiesen.

In der nachfolgenden Tabelle 1 ist die Zusammensetzung der zu Versuchszwecken hergestellten und untersuchten Kathoden 34, die Nickel und optional Cobaltoxid enthalten, dargestellt.

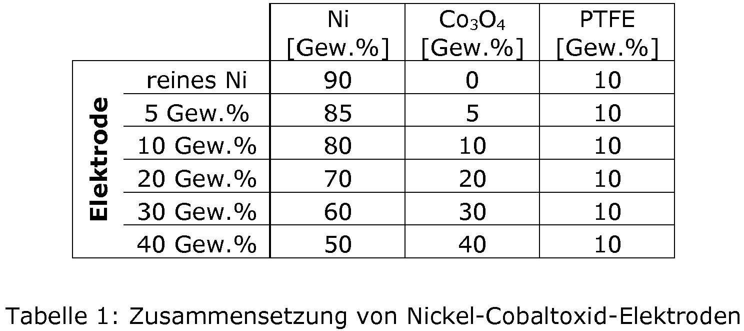

Alle hergestellten und untersuchten Kathoden 34 mit Cobaltoxid enthalten einen Anteil von 10 Gew.% Bindemittel in Form von PTFE. Der Gewichtsanteil von Cobaltoxid variiert von 0 bis 40 %, entsprechend variiert der Gewichtsanteil von Nickel zwischen 90 % und 50 %.

In der nachfolgenden Tabelle 2 ist die Zusammensetzung von hergestellten und untersuchten Kathoden 34 mit einem konstanten Cobaltoxid-Anteil von 20 Gew.%, jedoch unterschiedlichem Bindemittel-Anteil und Nickel-Anteil dargestellt. Der Gewichtsanteil von Nickel variiert zwischen 70 % und 76 %, der Gewichtsanteil des Bindemittels entsprechend zwischen 10 % und 4 %.

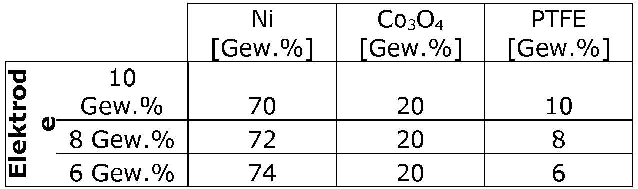

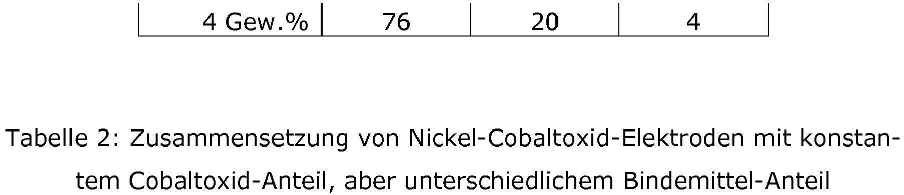

In der nachfolgenden Tabelle 3 ist die Zusammensetzung der zu Versuchszwecken hergestellten und untersuchten Kathoden 34, die Nickel und Iridiumoxid enthalten, dargestellt und die jeweilige Dicke der Elektrode angegeben.

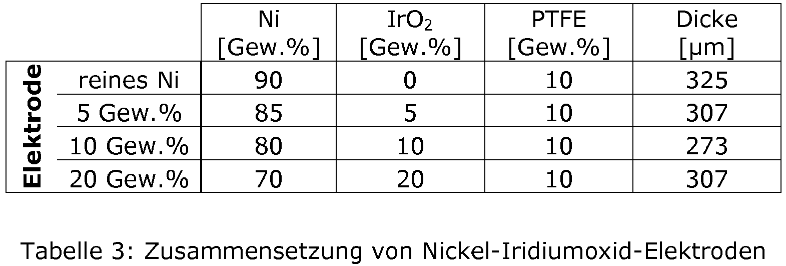

Alle hergestellten und untersuchten Kathoden 34, die Iridiumoxid enthalten, enthalten einen Anteil von 10 Gew.% Bindemittel in Form von PTFE. Der Gewichtsanteil von Iridiumoxid variiert von 0 bis 20 %, entsprechend variiert der Gewichtsanteil von Nickel zwischen 90 % und 70 %.

Nickel ist der Hauptbestandteil der vorgeschlagenen Gasdiffusionselektroden 44. Daher wurden zunächst Gasdiffusionselektroden 44 aus reinem Nickel hergestellt sowie deren Langzeitstabilität und Verhalten getestet.

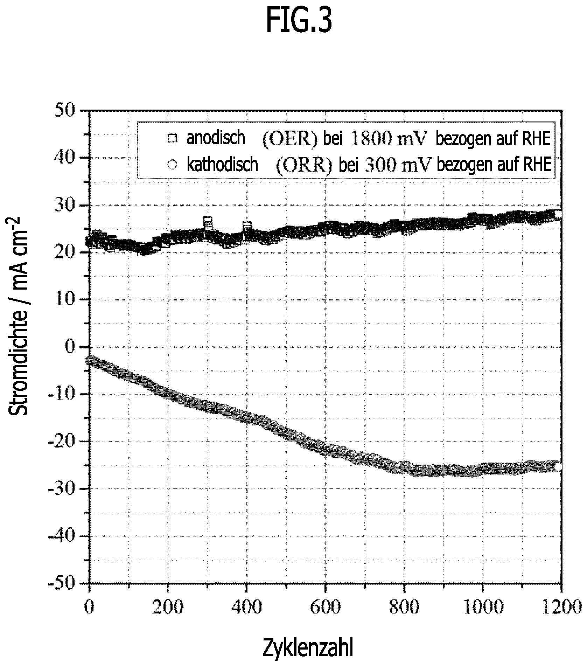

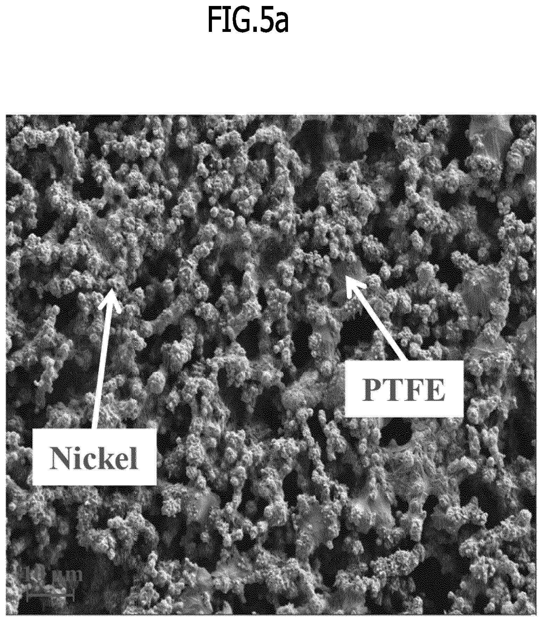

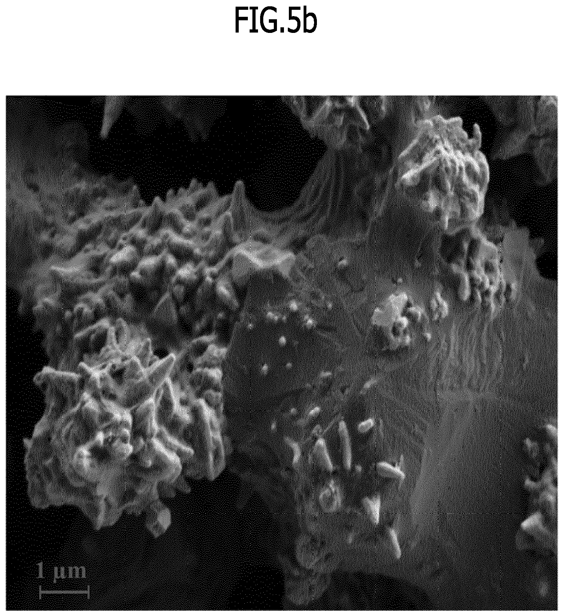

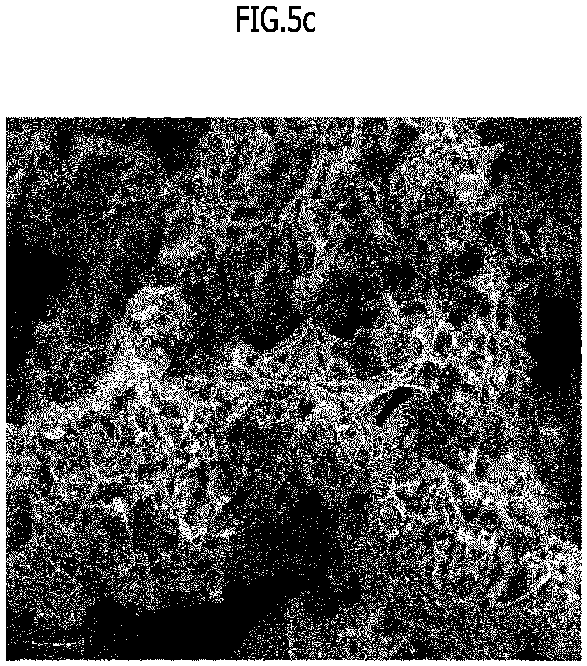

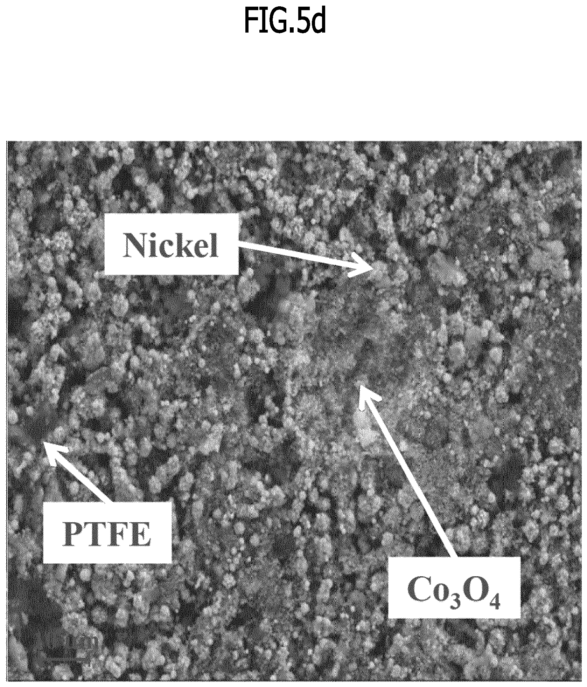

Figur 3 zeigt Kurven maximaler Stromdichten sowohl bei kathodischem Betrieb, also in der Sauerstoffreduktionsreaktion (ORR) bei 300 mV bezogen auf die reversible Wasserstoffelektrode (RHE),
als auch im anodischen Betrieb, also in der Sauerstoffentwicklungsreaktion (OER) bei 1800 mV bezogen auf die reversible Wasserstoffelektrode (RHE). Die durchgeführte Lanzeituntersuchung über 1200 Lade- und Entladezyklen zeigt eine sehr hohe Stabilität des reinen Nickels unter den angegebenen Versuchsbedingungen. Die maximale Stromdichte in der Sauerstoffentwicklungsreaktion schwankt lediglich in einem kleinen Bereich und verbessert sich mit der Zahl der Lade- und Entladezyklen. Dies könnte an einer größer werdenden Rauheit der Oberfläche der Gasdiffusionselektrode mit zunehmender Zahl der Lade- und Entladezyklen liegen. Figur 5c zeigt diese zunehmende Rauheit der Oberfläche. Zum Vergleich zeigen die Figuren 5a und 5b Rasterelektronenmikroskopaufnahmen der reinen Nickelelektrode, Figur 5d eine Elektrode mit einem Gewichtsanteil von Cobaltoxid von 20 %. Es ist erkennbar, dass die Elektrodenstruktur beider Elektrodenvarianten insgesamt sehr porös ist. Cobaltoxid-Partikel bilden Agglomerate und bedecken teilweise die im Vergleich zu den Cobaltoxid-Partikeln größeren Nickel-Partikel.

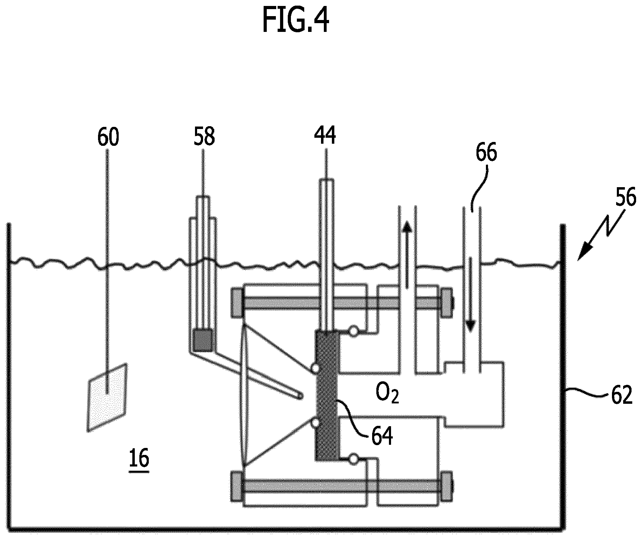

Zur elektrochemischen Charakterisierung der verschiedenen Gasdiffusionselektroden 44 wurden elektrochemische Tests in einer schematisch in Figur 4 dargestellten Halbzelle 56 mit drei Elektroden durchgeführt, und zwar der Gasdiffusionselektrode 44 einer Referenzelektrode 58 in Form einer reversiblen Wasserstoffelektrode (RHE) sowie einer Platinelektrode 60 als Gegenelektrode. Die Halbzelle 56 umfasst einen Behälter 62, in dem die drei Elektroden 44, 58 und 62 angeordnet sind. Der Behälter 62 ist mit einem Elektrolyt 16 in Form einer 1 M LiOH Lösung gefüllt ist. Das elektrochemische Potential wurde gemessen zwischen der eine Arbeitselektrode bildenden Gasdiffusionselektrode 44 und der Referenzelektrode 58. Der aktive Bereich der Halbzelle betrug 1 cm². Zur Verringerung von Kontaktwiderständen zwischen dem Stromkollektor der Halbzelle und der Arbeitselektrode ist letztere zusätzlich mit einer Schicht aus Sigracet® GDL 35DC zum Gaseinlass hin versehen. Als Testgas wurde trockener reiner Sauerstoff (O₂) 66 in Richtung des Pfeils 70 zum Gaseinlass 64 der Halbzelle hin und in Richtung des Pfeils 72 von diesem wieder weg geleitet.

Der Behälter 62 enthielt für die Messungen 1000 ml Elektrolyt und wurde bei 25°C temperiert. Zyklische Voltammogramme (CV), potentiostatische Diagramme (PC) und elektrochemische Impendanzspektren (EIS) wurden mit einer Zahner IM6 elektrochemischen Workstation durchgeführt. Die Elektroden wurden betrieben mit einer Potentialspannung zwischen 0,3 V und 1,8 V bezogen auf die Referenzelektrode 58 mit einer Vorschubgeschwindigkeit (Slew Rate) von 1 mVs⁻¹. Vortests haben ergeben, dass die Gasdiffusionselektroden 44 nach 20 Lade- und Entladezyklen ein stabiles elektrochemisches Verhalten zeigen. Daher wurde vor der Durchführung von Impedanzmessungen und potentiostatischen Messungen jede Elektrode 20-mal in beiden Richtungen betrieben. Potentiostatische elektrochemische Impedanzspektren wurden bei offener Zellspannung (OCV) sowie bei OCV ± 100 mV, ± 300mV, ± 500mV und ± 700mV. Der Frequenzbereich für die EIS war 100 mHz bis 100 kHz mit einer Amplitude von 5 mV. Für Langzeitmessungen wurden die Kathoden 34 1200 Lade- und Entladezyklen unterworfen mit derselben Vorschubgeschwindigkeit von 1 mVs⁻¹. Die Langzeittests wurden für alle untersuchten Gasdiffuionselektroden 44 nach den Standardtests durchgeführt.

Die Morphologie der Gasdiffusionselektroden 44 wurde mit einem Rasterelektronenmikroskop Zeiss® ULTRA mit SEM und Ladungskompensation untersucht.

Die Figur 5a und 5b zeigen den mikroskopischen Aufbau einer unbenutzten Gasdiffusionselektrode aus reinem Nickel mit einem Bindemittel-Anteil von 10 Gew.%. Die Bestandteile Nickel und PTFE sind in Figur 5a mit Pfeilen bezeichnet.

Figur 5c zeigt den mikroskopischen Aufbau der Gasdiffusionselektrode aus reinem Nickel mit einem Bindemittel-Anteil von 10 Gew.% nach 1200 Lade- und Entladezyklen.

Figur 5d zeigt den mikroskopischen Aufbau einer Gasdiffusionselektrode mit einem Gewichtsanteil von Nickel von 70 %, einem Gewichtsanteil von 20 % Cobaltoxid und einem Gewichtsanteil von 10 % Bindemittel. Die Bestandteile Nickel, Cobaltoxid und PTFE sind in Figur 5d mit Pfeilen bezeichnet.

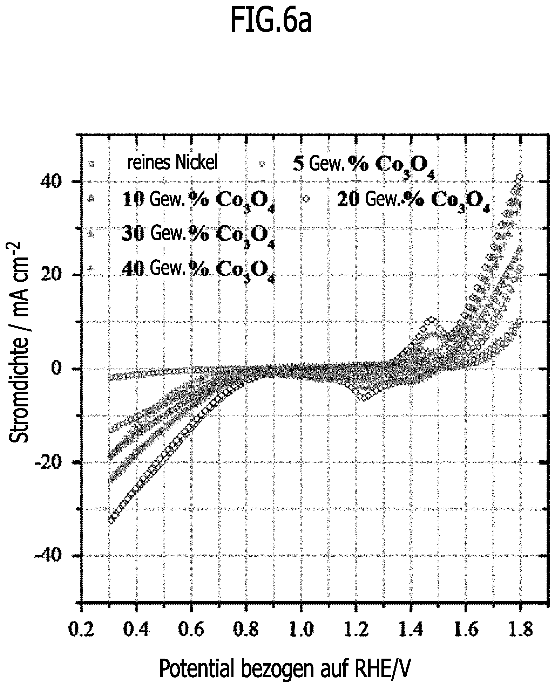

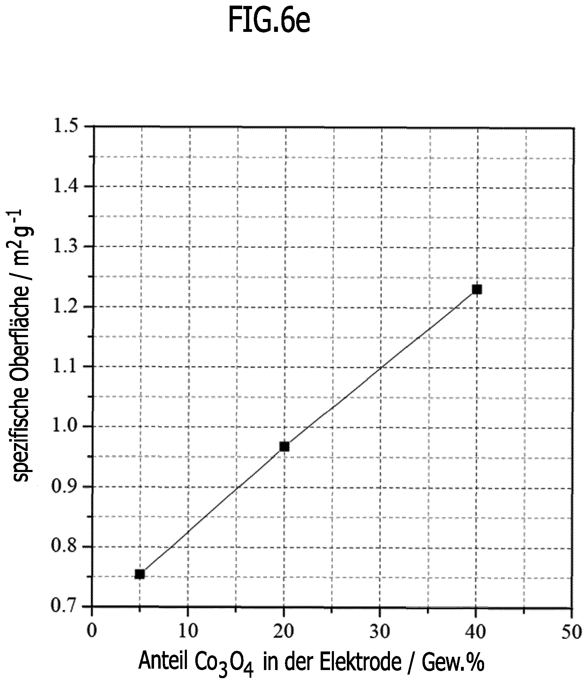

Zyklovoltammogramme, also die Abhängigkeit der Stromdichte in mA/cm² vom Potential bezogen auf die Referenzelektrode 58 in Volt für die sechs in Tabelle 1 zusammengestellten Zusammensetzungen der Gasdiffusionselektroden 44, die also einen variablen Gewichtsanteil von Cobaltoxid zwischen 0 % und 40 %, einen Gewichtsanteil von Polytetrafluorethylen von 10 % und einen entsprechenden Gewichtsanteil von Nickeln zwischen 90 % und 50 % enthalten, sind in Figur 6a dargestellt.

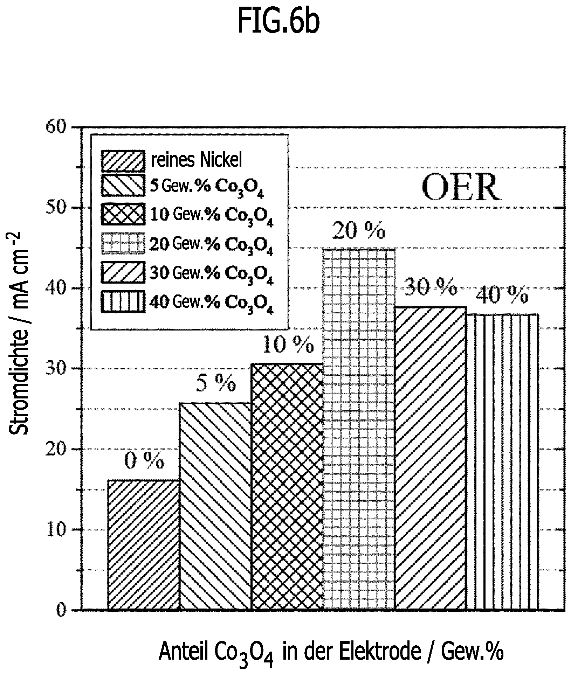

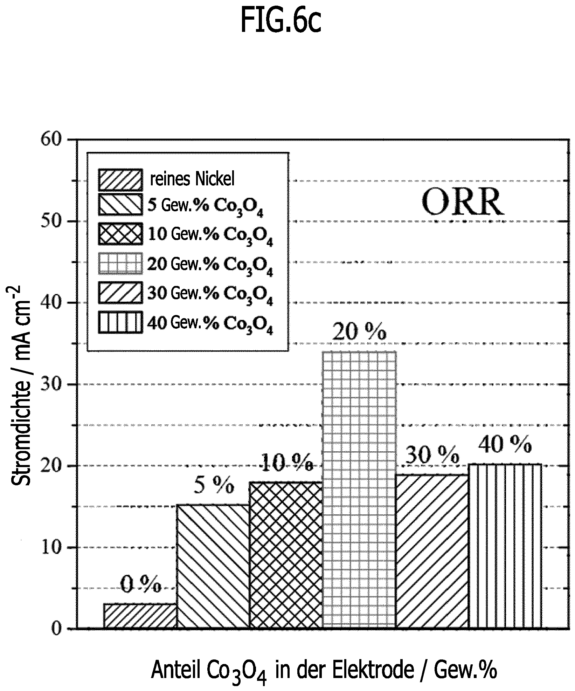

Wie in Figur 6a zu erkennen, nimmt mit zunehmendem Cobaltoxidanteil die Leistung der Kathode 34 zu und erreicht bei einem Anteil von 20 Gewichtsprozent Cobaltoxid und 70 Gewichtsprozent Nickel ein Maximum. Dies gilt sowohl anodischen Betrieb, also in der Sauerstoffentwicklungsreaktion (OER) wie in Figur 6b dargestellt, als auch bei kathodischem Betrieb, also in der Sauerstoffreduktionsreaktion (ORR) wie in Figur 6c dargestellt. Wird der Cobaltoxid-Anteil weiter erhöht, nimmt die maximale Stromdichte wieder ab. Dies resultiert aus dem zunehmenden elektrischen Widerstand mit zunehmendem Cobaltoxid-Anteil.

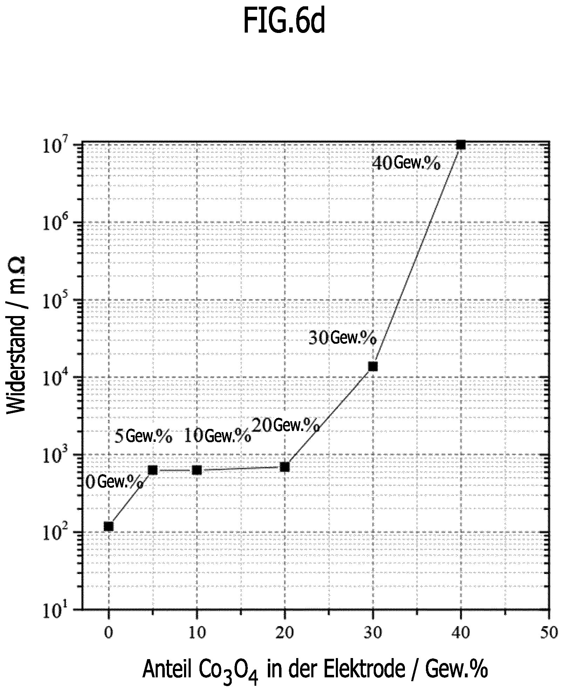

Figur 6d zeigt die Ergebnisse der elektrischen Leitfähigkeitsmessungen der getesteten Gasdiffusionselektroden und den stark ansteigenden Widerstand für Cobaltoxid-Anteile von 30 Gew.% und 40 Gew.%. Mit zunehmendem Anteil von Cobaltoxid-Partikeln werden immer mehr Strompfade zwischen Nickel-Partikeln blockiert, was zu einer verringerten elektrischen Leitfähigkeit führt.

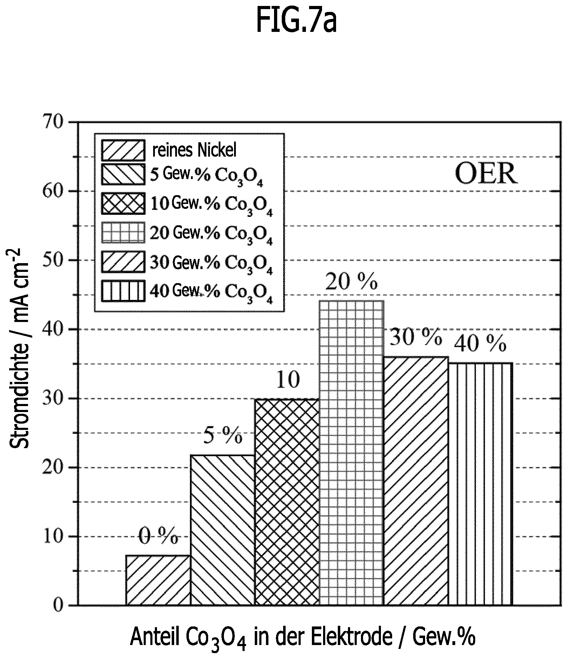

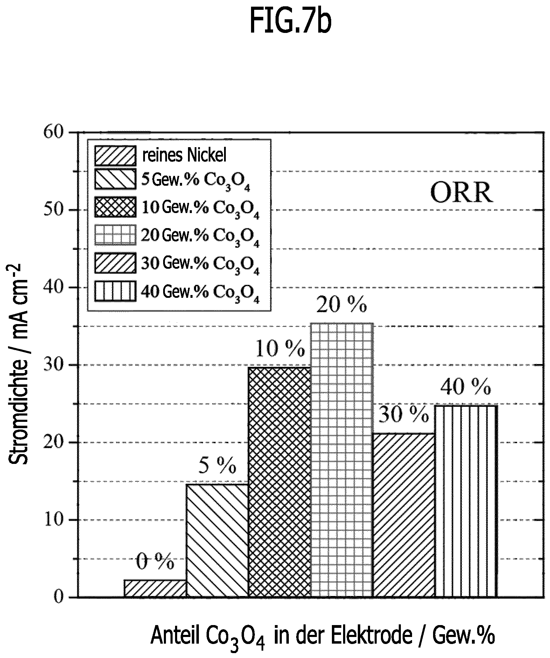

Für den zukünftigen Einsatz in Lithium-Luft-Batterien mit wässrigem alkalischen Elektrolyt ist jedoch nicht nur die Leistung in Abhängigkeit der Zahl der Lade- und Entladezyklen von Bedeutung. Die Gasdiffusionselektroden sollen über die Lade- und Entladezyklen auch stabile Stromdichten zeigen. Um dies zu prüfen, wurden potentiostatische Messungen durchgeführt, um das zeitabhängige Verhalten des Stromverlaufs der Elektroden zu ermitteln. Die zugehörigen Messdiagramme sind in Figur 7a im anodischen Betrieb, also in der Sauerstoffentwicklungsreaktion (OER) bei 1800 mV bezogen auf die reversible Wasserstoffelektrode (RHE), und in Figur 7b im kathodischem Betrieb, also in der Sauerstoffreduktionsreaktion (ORR) bei 300 mV bezogen auf die reversible Wasserstoffelektrode (RHE), dargestellt. Es handelte sich dabei um dieselben Elektroden, mit denen die in Figur 6a dargestellten Zyklovoltammogramme aufgenommen wurden. Die Figuren 7a und 7b zeigen, dass alle Elektroden nahezu die gleichen Stromdichten erreichten, wie sie durch die aufgenommenen Zyklovoltammogramme bestimmt wurden.

Die Gasdiffusionselektroden 44 blieben über die Messdauer von 15 Minuten stabil.

Wie bei den Zyklovoltammogrammen scheint der Einfluss der elektrischen Leitfähigkeit der Hauptgrund für die Abnahme der Stromdichten zu sein, wenn der Gewichtsanteil von Cobaltoxid mehr als 20 % beträgt. Die höchsten Stromdichten wurden auch bei den potentiostatischen Messungen für die Gasdiffusionselektrode mit einem Gewichtsanteil von 20 % Cobaltoxid ermittelt, und zwar sowohl in der Sauerstoffentwicklungsreaktion (OER) als auch in der Sauerstoffreduktionsreaktion (ORR).

Der Abfall der Stromdichten in der Sauerstoffreduktionsreaktion (ORR) für die Elektroden mit einem Gewichtsanteil von mehr als 20 % Cobaltoxid ist größer als in der Sauerstoffentwicklungsreaktion (OER). Dies könnte daran liegen, dass die katalytische Aktivität wichtiger ist als die elektrische Leitfähigkeit, insbesondere weil für die Sauerstoffreduktionsreaktion (ORR) leitfähiges Nickel bei einem Kathodenpotential von 300 mV vorhanden sein sollte.

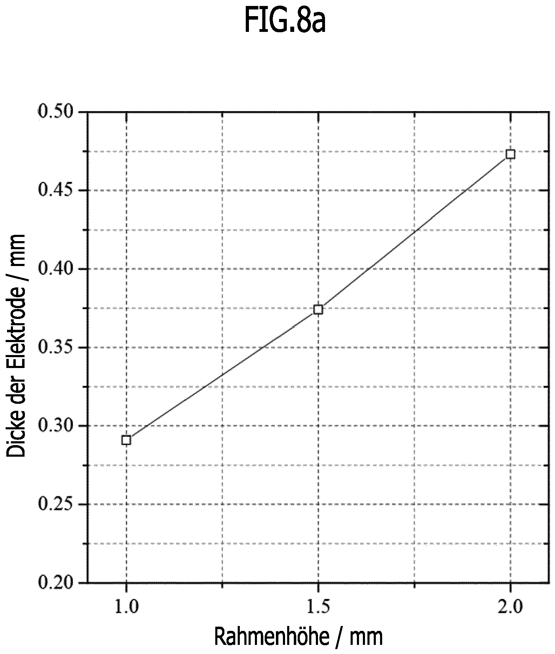

Nach Ermittlung der besten Zusammensetzung wurde der Einfluss der Dicke der Elektroden auf deren Leistungsfähigkeit untersucht, und zwar für die ermittelte beste Zusammensetzung der Elektroden sowohl durch Messung von Zyklovoltammogrammen und potentiostatischen Diagrammen. Figur 8a zeigt die Abhängigkeit der Elektrodendicke mit zunehmender Höhe des flexiblen Rahmens zur Bildung der Elektroden.

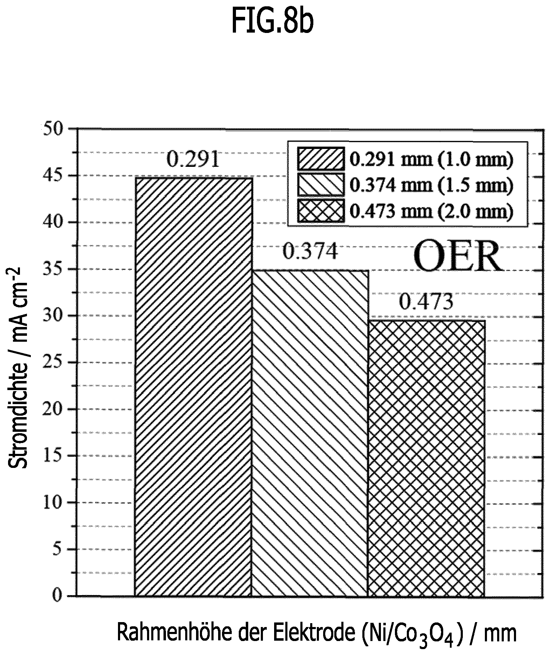

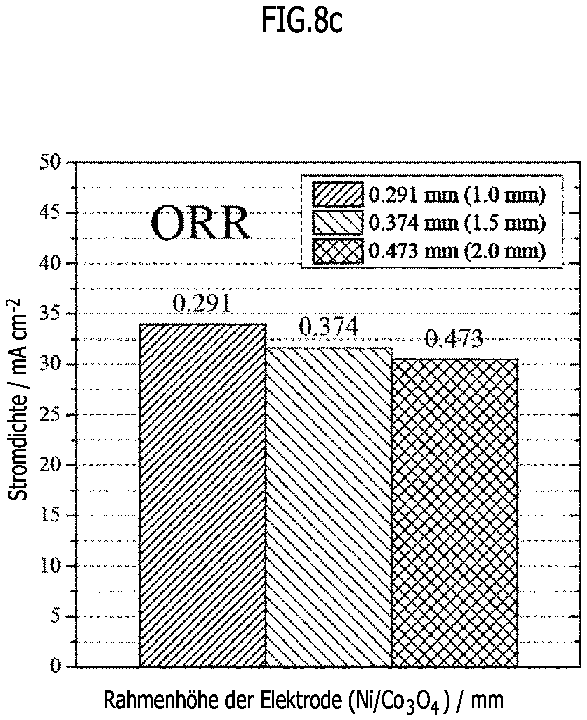

Sowohl die Zyklovoltammogramme als auch die potentiostatischen Diagramme zeigen abnehmende anodische und kathodische Stromdichten mit zunehmender Dicke. Die Elektroden, die mit dem 1 mm hohen flexiblen Rahmen ausgebildet wurden, zeigen die höchsten Stromdichten sowohl für die Sauerstoffentwicklungsreaktion (OER) als auch für die Sauerstoffreduktionsreaktion (ORR) in den Zyklovoltammogrammen. Dies ist in den Figuren 8b und 8c zu erkennen. Die Dicke dieser Elektroden betrug etwa 300 µm.

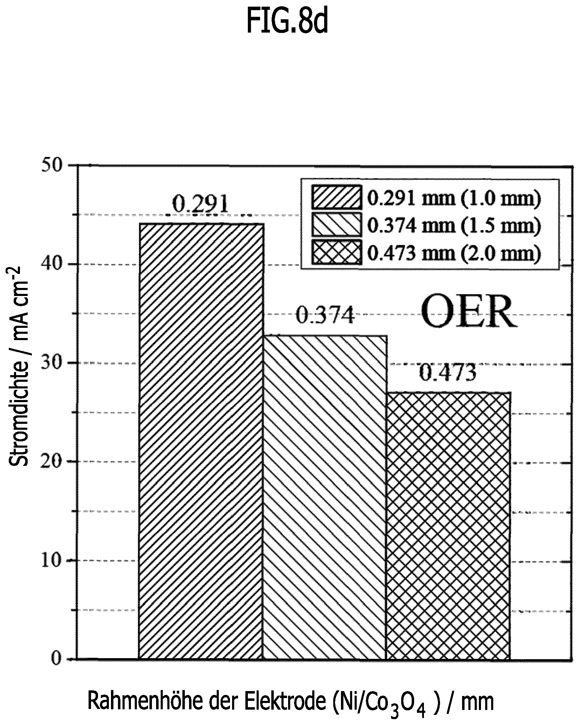

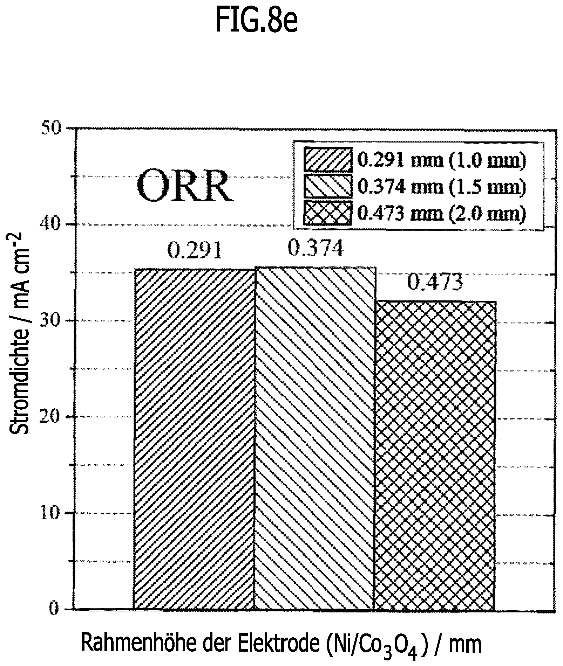

Wie bereits bei den oben beschriebenen anderen Messungen zeigen auch die potentiostatischen Diagramme, wie den Figuren 8d und 8e zu entnehmen, nur geringfügig niedrigere Stromdichten.

Insgesamt scheinen die Stromdichte für die Sauerstoffentwicklungsreaktion (OER) stärker von einer Elektrodendicke abzuhängen als für die Sauerstoffreduktionsreaktion (ORR), und zwar sowohl für die gemessenen Zyklovoltammogramme als auch für die potentiostatischen Diagramme. Die größere Abnahme kann möglicherweise daran liegen, dass kein ausreichender Abtransport des gebildeten Sauerstoffs durch die poröse Struktur der Elektrode möglich ist und aktive Bereiche der Elektrode durch Sauerstoffblasen blockiert werden.

Allerdings beeinflusst nicht nur die Dicke die Leistungsfähigkeit der Gasdiffusionselektrode, sondern auch der Anteil des hydrophoben Bindemittels. Das Bindemittel erhöht einerseits die mechanische Stabilität und erhält offene Porenstrukturen aufgrund seiner hydrophoben Eigenschaften, wenn ein wässriger Elektrolyt verwendet wird.

Um die Leistungsfähigkeit der Gasdiffusionselektroden weiter zu steigern, wurde der Gewichtsanteil des Bindemittels in Stufen von 2 Gew.% von 10 Gew.% auf 4 Gew.% wie in Tabelle 2 zusammengestellt reduziert. Da es sich bei Polytetrafluorethylen (PTFE) um einen elektrischen Isolator handelt, sollte ein geringer Bindemittel-Anteil der Gasdiffusionselektrode deren elektrische Leitfähigkeit erhöhen. Zusätzlich führt die Verringerung des Bindemittel-Anteils zu größeren aktiven Oberflächen sowohl für die Sauerstoffentwicklungsreaktion (OER) als auch für die Sauerstoffreduktionsreaktion (ORR), da eine Oberfläche der aktiven Partikel weniger bedeckt ist und dadurch die Stromdichte erhöht.

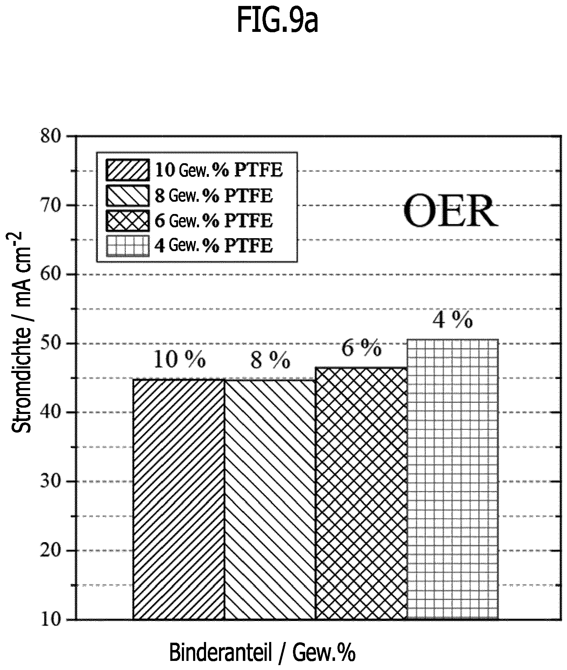

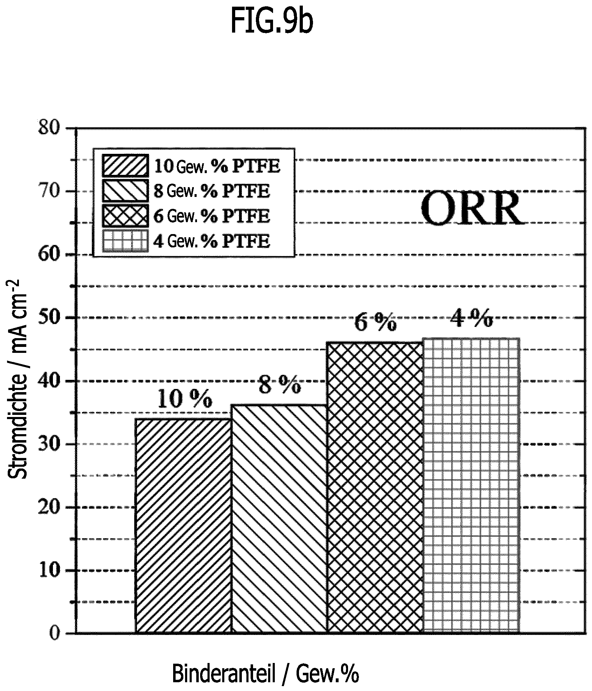

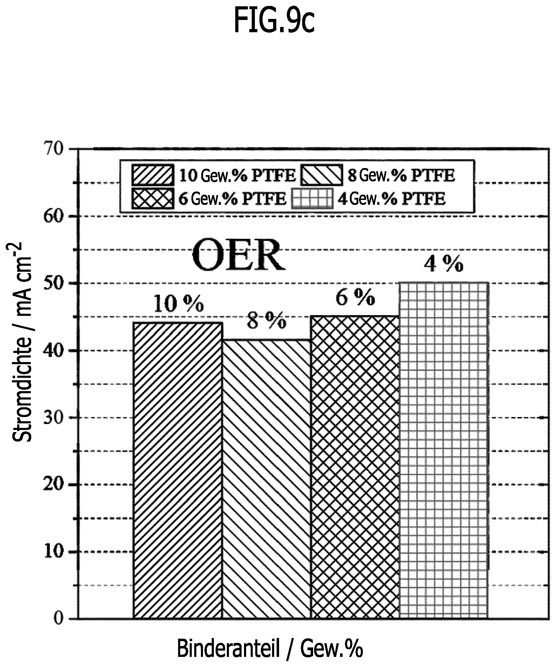

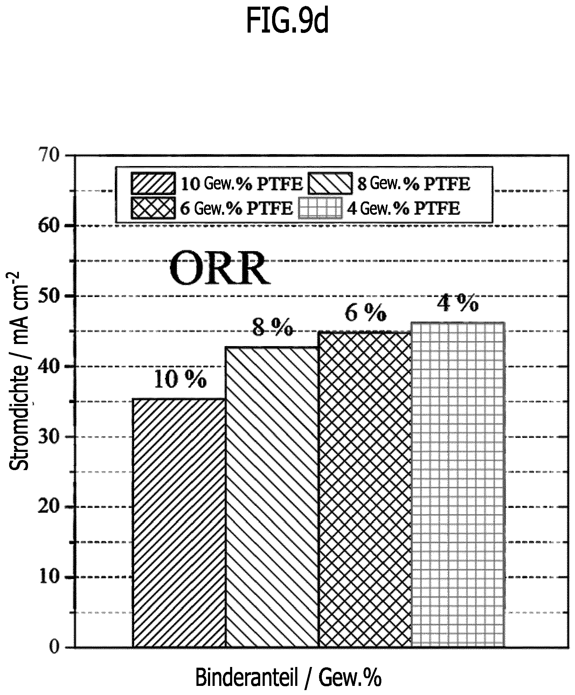

Die Figuren 9a bis 9d zeigen Absolutwerte anodischer (OER) und kathodischer (ORR) Stromdichten sowohl für die gemessenen Zyklovoltammogramme als auch für die potentiostatischen Diagramme. Die Verringerung des Bindemittel-Anteils hat einen signifikanten Einfluss auf die Stromdichten der eine Mischung aus Nickel und Cobaltoxid enthaltenden Gasdiffusionselektroden 44.

So zeigt die Elektrode mit einem Bindemittel-Anteil von 4 Gew.% die höchsten anodischen und kathodischen Stromdichten für die gemessenen Zyklovoltammogramme, wie in den Figuren 7a und 7b zu erkennen.

Für eine möglichst gute mechanische Stabilität ist vorzugsweise ein Bindemittel-Anteil von mindestens 6 Gew.% vorteilhaft.

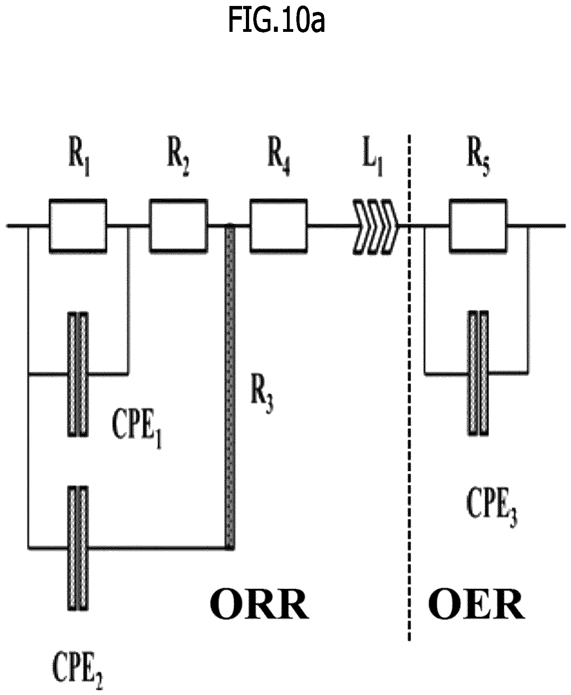

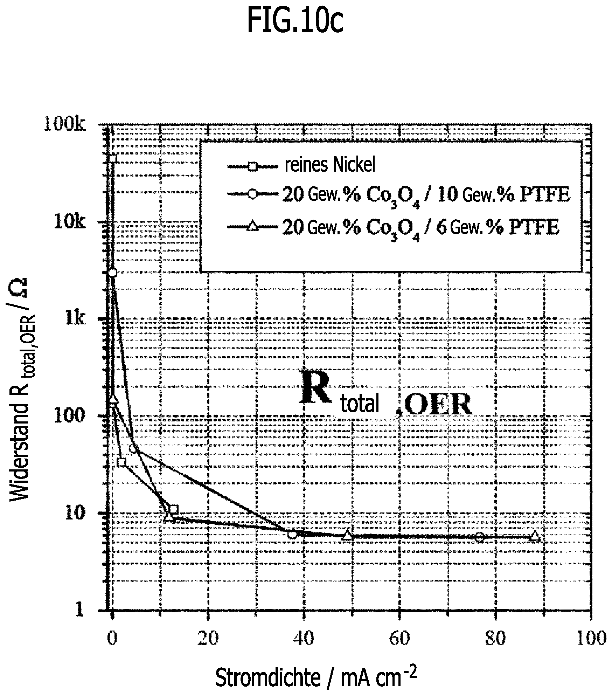

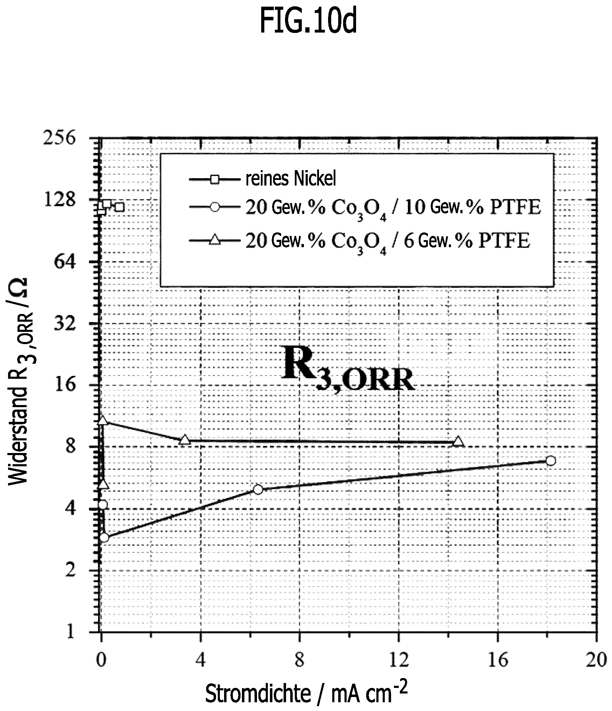

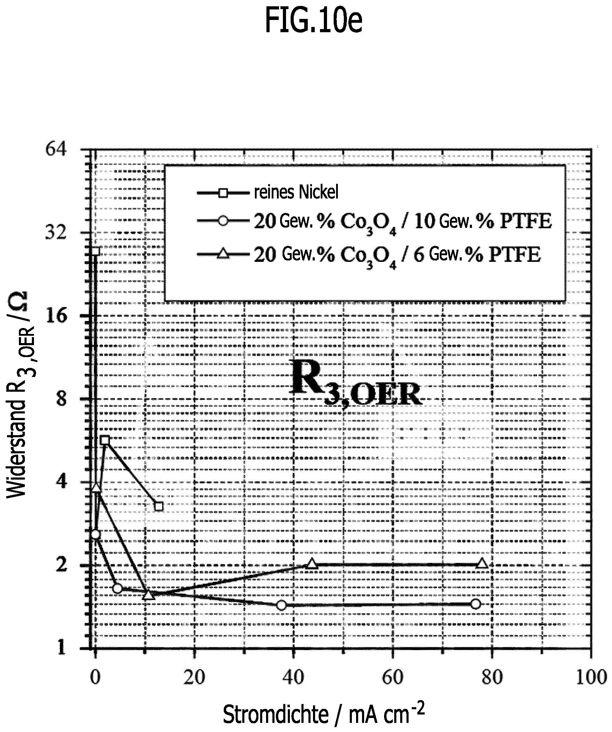

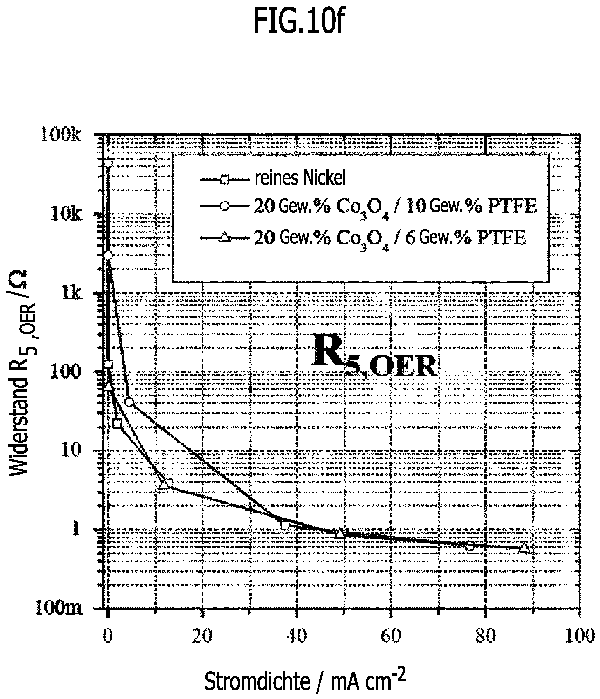

Zur weiteren Charakterisierung der Kathoden wurden elektrochemische Impedanzspektren (EIS) aufgenommen und ausgewertet. Zur Anpassung der Impedanzspektren wurden zwei verschiedene Modelle verwendet. Für die Sauerstoffreduktionsreaktion (ORR) wurde das in Figur 10a dargestellte Ersatzschaltbild zur Anpassung der Messpunkte verwendet.

Der Widerstand R₁ und das Konstantphasenelement CPE₁ bilden die Adsorption von Sauerstoff an der katalytischen Oberfläche der Kathode ab. Der Widerstand R₂ betrifft den Ladungstransfer-Prozess an der Kathodenoberfläche. Das Konstantphasenelement CPE₂ bildet die Doppelschichtkapazität ab. Da eine Gasdiffusionselektrode 44 eine poröse Struktur aufweist, berücksichtigt das Ersatzschaltbild diese Struktur aufgrund der Einflüsse der Struktur auf die Leistung. Dies wird im Ersatzschaltbild durch den Widerstand R₃ abgebildet, der den elektrolytischen Widerstand in der porösen Kathode 34 auf Basis einer homogenen Porensystemwiderstandssimulation darstellt. Der Widerstand R₄ umfasst den ohmschen Widerstand des Elektrolyts 16 und der Kontakte. Die Induktivität L₁ berücksichtigt Induktivitäten insbesondere von Kabel- und Stromkollektoren.

Ferner wurde das in Figur 10a dargestellte Ersatzschaltbild auch für die Anpassung der Messpunkte in der Sauerstoffentwicklungsreaktion (OER) verwendet. Das in Figur 10a dargestellte Modell ist dem für die Sauerstoffreduktionsreaktion (ORR) ähnlich, wurde jedoch durch einen weiteres Element, nämlich einen Widerstand R₅ und ein zu diesem parallel geschaltetes zweites Konstantphasenelement CPE_{3,}, ergänzt wie in Figur 10a rechts dargestellt. Dieses zusätzliche Element bezieht sich auf die wachsende Oxidschicht auf der Oberfläche der Gasduffusionselektrode während der Sauerstoffentwicklungsreaktion (OER).

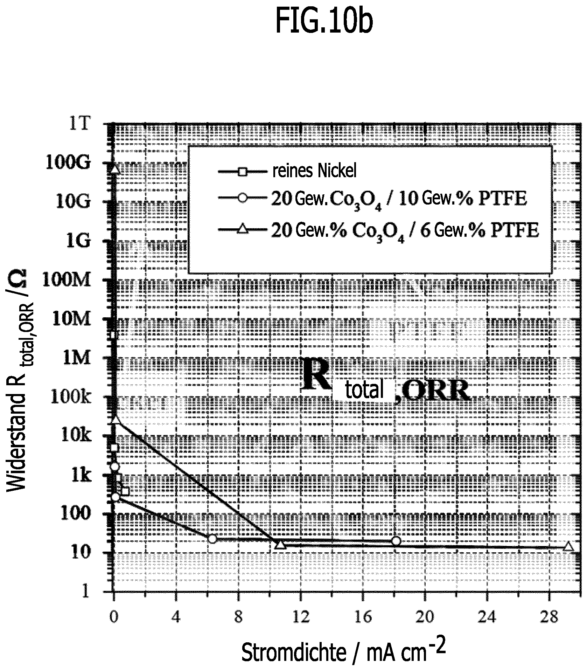

Die Figuren 10b bis 10f sind wichtige Ergebnisse für die Modellierung der elektrochemischen Impedanzspektren (EIS) dargestellt, und zwar für die Elektrode aus reinem Nickel, die Elektrode mit einem Gewichtsanteil von Cobaltoxid von 20 % und einem Bindemittelanteil von 10 Gew.% sowie die Elektrode mit einem Gewichtsanteil von Cobaltoxid von 20 % und einem Bindemittelanteil von 6 Gew.%.

Durch die elektrochemischen Impedanzspektren (EIS) konnten die Ergebnisse der gemessenen Zyklovoltammogramme bestätigt werden. Die in Figur 8c für die Sauerstoffentwicklungsreaktion (OER) dargestellten Gesamtwiderstände R_{total,OER} und die in Figur 8b für die Sauerstoffreduktionsreaktion (ORR) dargestellten Gesamtwiderstände R_{total,ORR} stehen im Einklang mit den gemessenen Zyklovoltammogrammen für diese Elektroden. Es ist insbesondere erkennbar, dass die Gesamtwiderstände mit zunehmenden Stromdichten abnehmen.

Die Elektrode mit den höchsten erreichten Stromdichten, nämlich die Elektrode mit einem Gewichtsanteil von Cobaltoxid von 20 % und einem Bindemittelanteil von 6 Gew.%, weist den niedrigsten Gesamtwiderstand sowohl in der Sauerstoffentwicklungsreaktion (OER) als auch in der Sauerstoffreduktionsreaktion (ORR).

Allerdings ist auch zu beobachten, dass die reine Nickel-Elektrode die höchsten Widerstände zeigt, was in den niedrigsten erreichten Stromdichten resultiert.

Mit zunehmender Stromdichte nimmt bei der Sauerstoffreduktionsreaktion (ORR) die Molarität des Elektrolyt in den Poren der Gasdiffusionselektrode ebenfalls zu. Eine höhere molare LiOH-Lösung weist jedoch eine höhere Leitfähigkeit auf, die die Leistungsfähigkeit der Elektrode beeinflusst. Aufgrund der deutlich verbesserten Leistungsfähigkeit der Cobaltoxid enthaltenden NickelElektroden in der Sauerstoffreduktionsreaktion (ORR), sollte der Widerstand in den Poren der Gasdiffusionselektrode als ein Teil des Gesamtwiderstands ebenfalls kleiner sein als bei der Elektrode aus reinem Nickel. Wie in Figur 8d zu erkennen, ist dies tatsächlich der Fall. Der Widerstand R_{3,ORR} der Elektrode aus reinem Nickel ist um eine Größenordnung größer als für die Cobaltoxid enthaltenden Elektroden.

In der Sauerstoffentwicklungsreaktion (OER) ist der Widerstand R_{3,OER} der Cobaltoxid enthaltenden Elektroden ebenfalls geringer und steht damit im Einklang zu den höheren erreichten Stromdichten für diese Elektroden.

Zudem ist erkennbar, dass die Abhängigkeit des Widerstands R_{5,OER} von der Stromdichte bei allen Elektroden ungefähr gleich ist. Dies ist ein Indiz dafür, dass Nickel die sich bildende Oxidschicht auf der Elektrodenoberfläche dominiert.

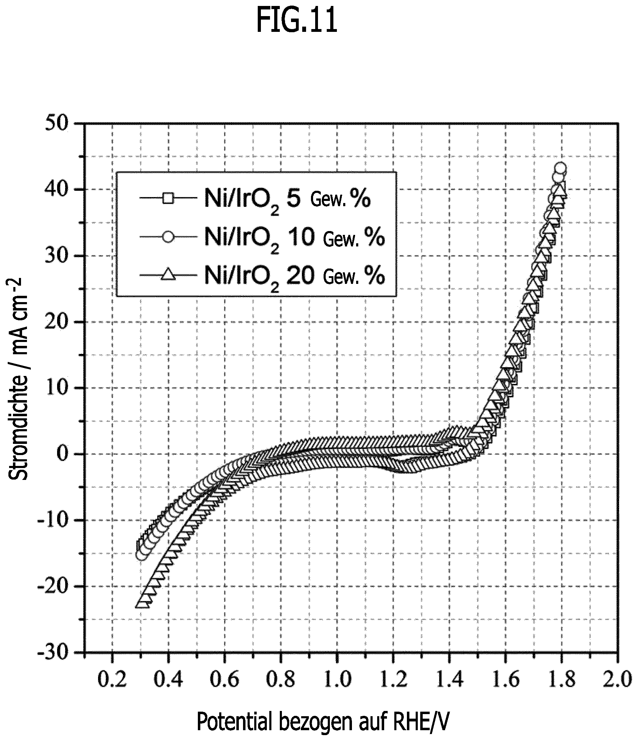

In Figur 11 sind ferner noch Zyklovoltammogramme von Gasdiffusionselektroden dargestellt, die aus Nickel mit 5%igem Gewichtsanteil Iridiumoxid, mit 10%igem Gewichtsanteil Iridiumoxid und mit 20%igem Gewichtsanteil Iridiumoxid hergestellt wurden. Es ist erkennbar, dass mit zunehmendem Iridiumoxidanteil die Leistung der Kathode 34 zunimmt und bei einem Anteil von 20 Gewichtsprozent Cobaltoxid und 70 Gewichtsprozent Nickel ein Maximum erreicht.

Wie oben eingehend dargelegt, zeigen kohlenstofffreie Kathoden 34 zum Einsatz in Lithium-Luft-Batterien, die durch Mischen von Nickel mit Metalloxid-Nanopartikeln, insbesondere mit Cobaltoxid-Nanopartikeln, hergestellt wurden, eine verbesserte Leistung sowohl in der Sauerstoffreduktionsreaktion (ORR) als auch in der Sauerstoffentwicklungsreaktion (OER). Besonders gute Leistungswerte für solche Kathoden ergeben sich für einen Gewichtsanteil von Cobaltoxid in der Kathode im Bereich zwischen 10 und 30 Gewichtsprozent. Ein Leistungsmaximum wird etwa bei 20 Gewichtsprozent Cobaltoxid in der Kathode erreicht, die ferner einen Gewichtsanteil von 70 % Nickel und 10 % Bindemittel in Form von PTFE enthält. Eine weitere Optimierung kann für Elektrodendicken von etwa 300 µm und mit einem reduzierten Bindemittel-Anteil von etwa 6 Gew.% erreicht werden.

Die vorgeschlagenen Kathoden 34, welche eine Mischung aus Nickel und Cobaltoxid enthalten, zeigen im Vergleich zu Kathoden 34, die eine Mischung aus Nickel und Iridiumoxid enthalten, ebenfalls hervorragende Leistungseigenschaften, die zudem die Eigenschaften von Kathoden 34 aus reinem Nickel deutlich übertreffen. Sie eignen sich daher hervorragend als Gasdiffusionselektroden in Metall-Luft-Batterien, insbesondere in Lithium-Luft-Batterien. Cobaltoxid enthaltende Elektroden sind zudem im Vergleich zu Iridiumoxid enthaltenden Kathoden 34 deutlich kostengünstiger in der Herstellung. Auch im Vergleich zu Gasdiffusionselektroden die Mischungen aus Silber und Cobaltoxid enthalten, ergeben sich im anodischen Betrieb bessere Leistungswerte für Nickel und Cobaltoxid enthaltende Elektroden. Lediglich im kathodischen Betrieb weisen Elektroden aus einer Mischung aus Silber und Cobaltoxid im Vergleich zu Nickel und Cobaltoxid enthaltenden Elektroden eine bessere Leistungsfähigkeit auf. Daher bietet sich Nickel als hervorragender Ersatz für Silber in Gasdiffusionselektroden an, die zusätzlich Cobaltoxid enthalten, dies nicht zuletzt aufgrund niedrigerer Materialkosten sowie einer im Vergleich zu Silber höheren Stabilität von Nickel.

### Bezugszeichenliste

- 10: Batterie
- 12: Metall-Luft-Batterie
- 14: negative Elektrode
- 16: Elektrolyt
- 18: positive Elektrode
- 20: Anode
- 22: Separator
- 24: Membran
- 26: Metall
- 28: Lithium (Li)
- 30: Gehäuse
- 32: Anodenkontakt
- 34: Kathode
- 36: Kathodenkontakt
- 38: Verbraucher
- 40: Verbindungsleitung
- 42: Verbindungsleitung
- 44: Gasdiffusionselektrode
- 46: Katalysator
- 48: Substrat
- 50: Nickel (Ni)
- 52: Cobaltoxid (Co₃O₄)
- 54: Netz
- 56: Halbzelle
- 58: Referenzelektrode
- 60: Gegenelektrode
- 62: Behälter
- 64: Gaseinlass
- 66: Sauerstoff
- 68: Dicke
- 70: Pfeil
- 72: Pfeil

## Patentansprüche

1. Gasdiffusionselektrode (44), insbesondere zur Verwendung als Kathode (34) für eine Batterie (10), insbesondere für eine Metall-Luft-Batterie (12), **dadurch gekennzeichnet, dass** sie ein Gemisch aus pulverförmigem Nickel (Ni) und einem pulverförmigem Metalloxid (52) enthält und dass das Metalloxid Cobaltoxid Co₃O₄, Rutheniumoxid RuO₂ oder Iridiumoxid IrO₂ ist oder enthält.

2. Gasdiffusionselektrode nach Anspruch 1, **dadurch gekennzeichnet, dass** sie aus einem Gemisch aus Nickel (Ni) (50) und dem Metalloxid (52) besteht und/oder dass sie ein Bindemittel enthält.

3. Gasdiffusionselektrode nach Anspruch 2, **dadurch gekennzeichnet, dass** ein Gewichtsanteil des Bindemittels in einem Bereich von etwa 2 % bis etwa 15 % liegt, insbesondere dass der Gewichtsanteil des Bindemittels etwa 4 % bis etwa 10 % beträgt, vorzugsweise 6 %.

4. Gasdiffusionselektrode nach einem der voranstehenden Ansprüche, **gekennzeichnet durch** eine Porosität in einem Bereich von etwa 40 % bis etwa 80 % liegt, insbesondere in einem Bereich von etwa 50 % bis etwa 65 %, und/oder dass eine Nickel-Korngröße des in der Gasdiffusionselektrode (44) enthaltenen Nickels (50) in einem Bereich von etwa 1 µm bis etwa 20 µm liegt, insbesondere in einem Bereich von etwa 3 µm bis etwa 7 µm, und/oder dass eine Dicke (68) in einem Bereich von etwa 200 µm bis etwa 500 µm liegt, insbesondere in einem Bereich von etwa 270 µm bis etwa 330 µm.

5. Gasdiffusionselektrode nach einem der voranstehenden Ansprüche, **gekennzeichnet durch** ein Substrat (48), welches die Mischung aus Nickel (50) und dem Metalloxid trägt.

6. Gasdiffusionselektrode nach Anspruch 5, **dadurch gekennzeichnet, dass** das Substrat (48) aus einem Metall hergestellt ist, insbesondere ist es in Form eines Metallnetzes (54) ausgebildet oder durch ein Streckmetall gebildet, vorzugsweise aus Edelstahl, Nickel oder Silber.

7. Verfahren zum Herstellen einer Gasdiffusionselektrode (44), insbesondere zur Verwendung als Kathode (34) für eine Batterie (10), insbesondere für eine Metall-Luft-Batterie (12), wobei sie durch Mischen von Nickel (Ni) (50) und einem Metalloxid (52) hergestellt wird, **dadurch gekennzeichnet, dass** als Metalloxid (52) Cobaltoxid Co₃O₄, Rutheniumoxid RuO₂ oder Iridiumoxid IrO₂ verwendet wird und dass das Nickel (50) und das Metalloxid (52) in Pulverform zusammengemischt werden.

8. Verfahren nach Anspruch 7, **dadurch gekennzeichnet, dass** das Nickel (50) und das Metalloxid (52) mit einem Bindemittel vermischt werden.

9. Verfahren nach Anspruch 7 oder 8, **dadurch gekennzeichnet, dass** zur Ausbildung der Gasdiffusionselektrode (44) die Bestandteile nach dem Mischen zusammengepresst werden, insbesondere mit einer hydraulischen Presse oder Walze.

10. Verfahren nach Anspruch 9, **dadurch gekennzeichnet, dass** ein Pressdruck beim Zusammenpressen in einem Bereich von 1 bar bis 5 bar liegt, insbesondere etwa 2,5 bar beträgt.

11. Verfahren nach Anspruch 9 oder 10, **dadurch gekennzeichnet, dass** zur Ausbildung der Gasdiffusionselektrode (44) die Bestandteile nach dem Mischen und Zusammenpressen getempert werden.

12. Verfahren nach Anspruch 11, **dadurch gekennzeichnet, dass** das Tempern für eine Temperzeit in einem Bereich von 30 Minuten bis 90 Minuten durchgeführt wird, insbesondere für eine Temperzeit von etwa 60 Minuten.

13. Verfahren nach Anspruch 11 oder 12, **dadurch gekennzeichnet, dass** die Gasdiffusionselektrode nach dem Tempern abgekühlt wird, insbesondere an Umgebungsluft.

14. Batterie (10), insbesondere eine Metall-Luft-Batterie (12), umfassend eine negative Elektrode (14) mit einem Anodenkontakt (32), eine positive Elektrode (18) mit einem Kathodenkontakt (36) und einen Elektrolyt (16), **dadurch gekennzeichnet, dass** die positive Elektrode (18) in Form einer Gasdiffusionselektrode (44) nach einem der Ansprüche 1 bis 6 ausgebildet ist oder eine solche umfasst.

15. Batterie nach Anspruch 14, **gekennzeichnet durch** einen alkalischen Elektrolyt (16), insbesondere durch einen wässrigen alkalischen Elektrolyt, und/oder durch einen organischen Elektrolyt (16), insbesondere einen wasserfreien organischen Elektrolyt (16), und/oder **dadurch, dass** die negative Elektrode (14) ein Metall ist oder umfasst oder Metallionen umfasst.

## Claims

1. Gas diffusion electrode (44), in particular for use as a cathode (34) for a battery (10), in particular for a metal-air battery (12), **characterized in that** it contains a mixture of pulverulent nickel (Ni) and a pulverulent metal oxide (52), and **in that** the metal oxide is or contains cobalt oxide Co₃O₄, ruthenium oxide RuO₂, or iridium oxide IrO₂.

2. Gas diffusion electrode in accordance with Claim 1, **characterized in that** it consists of a mixture of nickel (Ni) (50) and the metal oxide (52), and/or **in that** it contains a binder.

3. Gas diffusion electrode in accordance with Claim 2, **characterized in that** a proportion by weight of the binder is in a range of about 2% to about 15%, in particular **in that** the proportion by weight of the binder is about 4% to about 10%, preferably 6%.

4. Gas diffusion electrode in accordance with any one of the preceding Claims, **characterized by** a porosity in a range of about 40% to about 80%, in particular in a range of about 50% to about 65%, and/or in that a nickel grain size of the nickel (50) contained in the gas diffusion electrode (44) is in a range of about 1 µm to about 20 µm, in particular in a range of about 3 µm to about 7 µm, and/or in that a thickness (68) is in a range of about 200 µm to about 500 µm, in particular in a range of about 270 µm to about 330 µm.

5. Gas diffusion electrode in accordance with any one of the preceding Claims, **characterized by** a substrate (48) which bears the mixture of nickel (50) and the metal oxide.

6. Gas diffusion electrode in accordance with Claim 5, **characterized in that** the substrate (48) is produced of a metal, in particular it is configured in the form of a metal mesh (54) or is formed by an expanded metal, preferably of stainless steel, nickel, or silver.

7. Method for producing a gas diffusion electrode (44), in particular for use as a cathode (34) for a battery (10), in particular for a metal-air battery (12), wherein it is produced by mixing nickel (Ni) (50) and a metal oxide (52), **characterized in that** cobalt oxide Co₃O₄, ruthenium oxide RuO₂, or iridium oxide IrO₂ is used as metal oxide (52), and **in that** the nickel (50) and the metal oxide (52) are mixed together in powder form.

8. Method in accordance with Claim 7, **characterized in that** the nickel (50) and the metal oxide (52) are mixed with a binder.

9. Method in accordance with Claim 7 or 8, **characterized in that** for forming the gas diffusion electrode (44), the constituents are compressed after mixing, in particular with a hydraulic press or roller.

10. Method in accordance with Claim 9, **characterized in that** a pressing pressure upon compression is in a range of 1 bar to 5 bar, in particular is about 2.5 bar.

11. Method in accordance with Claim 9 or 10, **characterized in that** for forming the gas diffusion electrode (44), the constituents are tempered after mixing and compression.

12. Method in accordance with Claim 11, **characterized in that** the tempering is carried out for a tempering time in a range of 30 minutes to 90 minutes, in particular for a tempering time of about 60 minutes.

13. Method in accordance with Claim 11 or 12, **characterized in that** the gas diffusion electrode is cooled after tempering, in particular in ambient air.

14. Battery (10), in particular a metal-air battery (12), comprising a negative electrode (14) with an anode contact (32), a positive electrode (18) with a cathode contact (36), and an electrolyte (16), **characterized in that** the positive electrode (18) is configured in the form of a gas diffusion electrode (44) in accordance with any one of Claims 1 to 6 or comprises such a gas diffusion electrode (44).

15. Battery in accordance with Claim 14, **characterized by** an alkaline electrolyte (16), in particular by an aqueous alkaline electrolyte, and/or by an organic electrolyte (16), in particular a nonaqueous organic electrolyte (16), and/or in that the negative electrode (14) is or comprises a metal or comprises metal ions.

## Revendications

1. Electrode de diffusion de gaz (44), en particulier destinée à être utilisée comme cathode (34) pour une batterie (10), en particulier pour une batterie métal-air (12), **caractérisée en ce qu'**elle contient un mélange composé de nickel (Ni) pulvérulent et d'un oxyde de métal (52) pulvérulent, et que l'oxyde de métal est ou contient de l'oxyde de cobalt CO₃O₄, de l'oxyde de ruthénium RuO₂ ou de l'oxyde d'iridium IrO₂.

2. Electrode de diffusion de gaz selon la revendication 1, **caractérisée en ce qu'**elle est constituée d'un mélange composé de nickel (Ni) (50) et de l'oxyde de métal (52), et/ou qu'elle contient un liant.

3. Electrode de diffusion de gaz selon la revendication 2, **caractérisée en ce qu'**une proportion en poids du liant se situe dans une plage allant d'environ 2 % à environ 15 %, en particulier que la proportion en poids du liant va d'environ 4 % à environ 10 %, de préférence est de 6 %.

4. Electrode de diffusion de gaz selon l'une quelconque des revendications précédentes, **caractérisée par** une porosité dans une plage allant d'environ 40 % à environ 80 %, en particulier dans une plage allant d'environ 50 % à environ 65 %, et/ou en ce qu'une granulométrie de nickel du nickel (50) contenu dans l'électrode de diffusion de gaz (44) est située dans une plage allant d'environ 1 µm à environ 20 µm, en particulier dans une plage allant d'environ 3 µm à environ 7 µm, et/ou qu'une épaisseur (68) se situe dans une plage allant d'environ 200 µm à environ 500 µm, en particulier dans une plage allant d'environ 270 µm à environ 330 µm.

5. Electrode de diffusion de gaz selon l'une quelconque des revendications précédentes, **caractérisée par** un substrat (48), lequel supporte le mélange composé de nickel (50) et de l'oxyde de métal.

6. Electrode de diffusion de gaz selon la revendication 5, **caractérisée en ce que** le substrat (48) est fabriqué à partir d'un métal, en particulier est réalisé sous la forme d'un réseau métallique (54) ou est formé par un métal déployé, de préférence à partir d'acier inoxydable, de nickel ou d'argent.

7. Procédé de fabrication d'une électrode de diffusion de gaz (44), en particulier destinée à être utilisée en tant que cathode (34) pour une batterie (10), en particulier pour une batterie métal-air (12), dans lequel elle est fabriquée par mélange de nickel (Ni) (50) et d'un oxyde de métal (52), **caractérisé en ce que** de l'oxyde de cobalt CO₃O₄, de l'oxyde de ruthénium RuO₂ ou de l'oxyde d'iridium IrO₂ est utilisé en tant qu'oxyde de métal (52), et que le nickel (50) et l'oxyde de métal (52) sont mélangés ensemble sous forme pulvérulente.

8. Procédé selon la revendication 7, **caractérisé en ce que** le nickel (50) et l'oxyde de métal (52) sont mélangés à un liant.

9. Procédé selon la revendication 7 ou 8, **caractérisé en ce que**, pour réaliser l'électrode de diffusion de gaz (44), les composants sont comprimés après le mélange, en particulier avec une presse ou un cylindre hydraulique.

10. Procédé selon la revendication 9, **caractérisé en ce qu'**une pression de pressage lors de la compression se situe dans une plage allant de 1 bar à 5 bar, en particulier est d'environ 2,5 bar.

11. Procédé selon la revendication 9 ou 10, **caractérisé en ce que** pour réaliser l'électrode de diffusion de gaz (44), les composants sont recuits après le mélange et la compression.

12. Procédé selon la revendication 11, **caractérisé en ce que** le recuit est effectué pendant une durée de recuit dans une plage allant de 30 minutes à 90 minutes, en particulier pendant une durée de recuit d'environ 60 minutes.

13. Procédé selon la revendication 11 ou 12, **caractérisé en ce que** l'électrode de diffusion de gaz est refroidie après le recuit, en particulier au contact de l'air ambiant.

14. Batterie (10), en particulier batterie métal-air (12), comprenant une électrode négative (14) avec un contact d'anode (32), une électrode positive (18) avec un contact de cathode (36) et un électrolyte (16), **caractérisée en ce que** l'électrode positive (18) est réalisée sous la forme d'une électrode de diffusion de gaz (44) selon l'une quelconque des revendications 1 à 6 ou comprend une électrode de diffusion de gaz de ce type.

15. Batterie selon la revendication 14, **caractérisée par** un électrolyte alcalin (16), en particulier un électrolyte alcalin aqueux et/ou par un électrolyte organique (16), en particulier un électrolyte organique (16) sans eau, et/ou en ce que l'électrode négative (14) est un métal ou comprend des ions métalliques.
